# EUROPEAN PATENT APPLICATION

(11) **EP 4 668 738 A1**
(43) Date of publication of application: **24.12.2025**
(21) Application number: 24769839.2
(22) Date of filing: 07.03.2024
(51) Int. Cl.: H04N 19/11

(54) **CODING METHOD, DECODING METHOD, AND ELECTRONIC DEVICE**

(30) Priority: 13.03.2023 CN 202310284038
(71) Applicant: Huawei Technologies Co., Ltd., Shenzhen, Guangdong 518129 (CN)
(72) Inventor: WANG, Danni, Shenzhen, Guangdong 518129 (CN); YANG, Haitao, Shenzhen, Guangdong 518129 (CN); LUO, Yi, Shenzhen, Guangdong 518129 (CN); FENG, Junkai, Shenzhen, Guangdong 518129 (CN)
(74) Representative: Maiwald GmbH
(86) International application number: PCT/CN2024/080497
(87) International publication number: WO 2024/188146

(57) **Abstract**

Embodiments of this application provide an encoding and decoding method and an electronic device. The method includes: receiving a bitstream; parsing out a block vector BV of a current subblock from the bitstream, where a prediction mode of a coding unit CU to which the current subblock belongs is an intra block copy IBC mode; for the current subblock, determining, based on the BV of the current subblock, whether to use another intra prediction mode to replace the IBC mode; if it is determined that the another intra prediction mode is to be used to replace the IBC mode, performing other intra prediction on the current subblock, to obtain a predicted value of the current subblock; or if it is determined that the another intra prediction mode is not to be used to replace the IBC mode, performing IBC prediction on the current subblock based on the BV of the current subblock, to obtain a predicted value of the current subblock; and reconstructing the current subblock based on the predicted value of the current subblock, to obtain a reconstructed block of the current subblock. In this way, neither a bit rate nor a search area for IBC prediction is increased. In addition, coding unit prediction flexibility can be further increased, prediction at a finer granularity is implemented, prediction accuracy is improved, and compression performance is improved.

## Description

This application claims priority to Chinese Patent Application No. 202310284038.5, filed with the China National Intellectual Property Administration on March 13, 2023 and entitled "ENCODING AND DECODING METHOD AND ELECTRONIC DEVICE", which is incorporated herein by reference in its entirety.

### TECHNICAL FIELD

Embodiments of this application relate to the encoding and decoding field, and in particular, to an encoding and decoding method and an electronic device.

### BACKGROUND

An encoding process usually includes operations such as prediction, quantization, and entropy encoding. Prediction is usually performed to remove redundant information in an image or a video, so that compression is performed more easily. Therefore, improving prediction accuracy is one of manners of improving compression performance.

A coding unit may include subblocks with different content characteristics (for example, different texture directions). Prediction effect of some subblocks may be poor if a same intra prediction mode is used for all subblocks in the coding unit. In the conventional technology, a solution of increasing a search area is proposed for a coding unit whose intra prediction mode is an intra block copy (Intra block copy, IBC) mode. In this way, prediction effect of each subblock in a code block is enhanced, but search costs are high.

### SUMMARY

To resolve the foregoing technical problem, this application provides an encoding and decoding method, to reduce search costs in a prediction process and improve compression performance.

It should be noted that this application provides an encoding and decoding method for a CU whose prediction mode is an IBC mode. A function of a block vector (Block Vector, BV) of each subblock is extended, to nest another intra prediction mode into the IBC mode. In this way, the search costs in the prediction process are reduced, and the compression performance is improved.

According to a first aspect, an embodiment of this application provides a decoding method. The method includes: receiving a bitstream; parsing out a block vector BV of a current subblock from the bitstream, where a prediction mode of a coding unit CU to which the current subblock belongs is an intra block copy IBC mode; for the current subblock, determining, based on the BV of the current subblock, whether to use another intra prediction mode to replace the IBC mode; if it is determined that the another intra prediction mode is to be used to replace the IBC mode, performing other intra prediction on the current subblock, to obtain a predicted value of the current subblock; or if it is determined that the another intra prediction mode is not to be used to replace the IBC mode, performing IBC prediction on the current subblock based on the BV of the current subblock, to obtain a predicted value of the current subblock; and reconstructing the current subblock based on the predicted value of the current subblock, to obtain a reconstructed block of the current subblock.

That is, the BV may not only be a vector absolute value offset value between a subblock and a corresponding reference block, but also indicate that the prediction mode is the another intra prediction mode. For a CU whose prediction mode is the IBC mode, the block vector BV is an existing syntax element in the bitstream. Therefore, in this application, nesting the another intra prediction mode into the IBC mode neither increases a bit rate, nor increases a search area for IBC prediction. In addition, coding unit prediction flexibility can be further increased, prediction at a finer granularity is implemented, prediction accuracy is improved, and compression performance is improved.

For example, IBC prediction is as follows: searching, by using a left area of the current subblock as the search area, the search area for a reference block matching the current subblock; and determining the predicted value of the current subblock based on a reconstructed value of the reference block matching the current subblock. For example, the reconstructed value of the reference block matching the current subblock may be used as the predicted value of the current subblock.

For example, the another intra prediction mode may be an intra prediction mode other than the IBC mode.

It should be noted that the another intra prediction mode in this application is a mode in which an encoder does not need to transmit extra information and a decoder can implement intra prediction based on decoded information and a pre-agreed parameter.

For example, a quantized predicted residual of the current subblock may be further parsed out from the bitstream; the quantized predicted residual of the current subblock is dequantized, to obtain a predicted residual of the current subblock; and the predicted value of the current subblock and a residual of the current subblock are added, to obtain the reconstructed block of the current subblock.

For example, for the current subblock, when it is determined that the another intra prediction mode is to be used to replace the IBC mode, the reference block of the current subblock may be determined based on the BV of the current subblock and a location of the current subblock; and the predicted value of the current subblock is determined based on the reconstructed value of the reference block of the current subblock.

For example, a BV set to first preset information may indicate that a prediction mode of the current subblock is the another intra prediction mode; and a BV set to second preset information may indicate that the prediction mode of the current subblock is the IBC mode. Further, whether the BV of the current subblock is the first preset information may be determined to determine, for the current subblock, whether to use the another intra prediction mode to replace the IBC mode. If the BV of the current subblock is the first preset information, for the current subblock, it is determined that the another intra prediction mode is to be used to replace the IBC mode. If the BV of the current subblock is not the first preset information, that is, the BV of the current subblock is the second preset information, for the current subblock, it is determined that the another intra prediction mode is not to be used to replace the IBC mode.

For example, reconstructed blocks of a plurality of subblocks may be stitched to obtain a reconstructed block of one CU.

According to the first aspect, the another intra prediction mode is a vertical prediction mode, and performing other intra prediction on the current subblock, to obtain the predicted value of the current subblock includes: performing vertical prediction on the current subblock, to obtain the predicted value of the current subblock. In this way, the vertical prediction mode can be nested into the IBC mode.

According to any one of the first aspect or the foregoing implementations of the first aspect, performing other intra prediction on the current subblock, to obtain the predicted value of the current subblock includes: selecting another intra prediction mode corresponding to the BV of the current subblock from R other intra prediction modes; and performing intra prediction on the current subblock based on the another intra prediction mode corresponding to the BV of the current subblock, to obtain the predicted value of the current subblock.

In this way, when the encoder performs intra prediction on the current subblock based on one of the R other intra prediction modes, the decoder may select another intra prediction mode corresponding to the encoder from the R other intra prediction modes based on the BV of the current subblock, to perform intra prediction.

For example, the encoder may perform intra prediction on the current subblock based on one of the vertical prediction mode, an angle prediction mode, or a direct current (Direct Current, DC) prediction mode. When the encoder performs vertical prediction on the current subblock, the decoder may also perform vertical prediction on the current subblock. When the encoder performs angle prediction on the current subblock, the decoder may also perform angle prediction on the current subblock. When the encoder performs DC prediction on the current subblock, the decoder may also perform DC prediction on the current subblock.

According to any one of the first aspect or the foregoing implementations of the first aspect, for the current subblock, when it is determined that another intra prediction mode is to be used to replace the IBC mode, the method further includes: determining flatness of the current subblock; and determining a quantization parameter QP_intra corresponding to the current subblock based on the flatness of the current subblock; and reconstructing the current subblock based on the predicted value of the current subblock, to obtain the reconstructed block of the current subblock includes: dequantizing, based on the quantization parameter QP_intra corresponding to the current subblock, a quantized predicted residual obtained by parsing the bitstream, to obtain a predicted residual of the current subblock; and adding the predicted value of the current subblock and the predicted residual of the current subblock, to obtain the reconstructed block of the current subblock.

That is, in a process of decoding a subblock that is in the CU and for which the another intra prediction mode is used to replace the IBC mode, dequantization is performed based on the quantization parameter QP_intra determined based on the flatness of the current subblock. In this way, subjective quality of the subblock for which the another intra prediction mode is used to replace the IBC mode can be improved.

According to any one of the first aspect or the foregoing implementations of the first aspect, determining the quantization parameter QP_intra corresponding to the current subblock based on the flatness of the current subblock includes: parsing out complexity information of the CU from the bitstream, and determining a quantization parameter QP_IBC corresponding to the CU; and determining the quantization parameter QP_intra corresponding to the current subblock based on the flatness of the current subblock, the complexity information, and the quantization parameter QP_IBC.

For example, the quantization parameter QP_IBC corresponding to the CU may be determined by a bit rate control module in the decoder.

In a possible manner, the bit rate control module may perform bit rate control based on a quantity of encoded bits (or buffer fullness) of a previous CU, and output the quantization parameter QP_IBC.

In a possible manner, the bit rate control module may perform bit rate control based on a quantity of encoded bits (or buffer fullness) of a previous CU and complexity information of a current CU, and output the quantization parameter QP_IBC.

That is, a manner in which the bit rate control module determines the quantization parameter QP_IBC is not limited in this application.

For example, the complexity information may be a complexity level. For example, a complexity level of the current CU may be determined based on a texture complexity level of the current CU and an IBC complexity level of the current CU. For example, a smaller value in the texture complexity level of the current CU and the IBC complexity level of the current CU may be determined as the complexity level of the current CU.

For example, the quantity of encoded bits of the previous CU may be obtained in a process of performing entropy decoding on a bitstream of the previous CU.

According to any one of the first aspect or the foregoing implementations of the first aspect, determining the quantization parameter QP_intra corresponding to the current subblock based on the flatness of the current subblock, the complexity information, and the quantization parameter QP_IBC includes: when the flatness of the current subblock and the complexity information meet a first preset condition, determining the quantization parameter QP_intra corresponding to the current subblock based on the quantization parameter QP_IBC and a first preset step; when the flatness of the current subblock and the complexity information meet a second preset condition, determining the quantization parameter QP_intra corresponding to the current subblock based on the quantization parameter QP_IBC and a second preset step; and when the flatness of the current subblock and the complexity information meet a third preset condition, using the quantization parameter QP_IBC as the quantization parameter QP_intra corresponding to the current subblock.

For example, the first preset condition is that flatness is less than or equal to (QpRefineTh0 << (bdIdx >> 1)), and a complexity level of a coding unit is greater than or equal to BwqComplexTh. A first quantization parameter determining manner is QP_intra=Max(QP_IBC-S0, 0). QpRefineTh0 is a 0^{th} gradient threshold of quantization parameter adjustment, BwqComplexTh is a subblock quantization parameter adjustment complexity threshold, S0 is an adjustment step (namely, the first preset step, for example, S0=2) corresponding to the 0^{th} gradient threshold, bdIdx=Clip3(0, S2, BitDepth-S3), and BitDepth is a bit depth of an image. S2 represents a maximum bit depth difference, for example, S2=8; and may be specifically set based on a requirement. This is not limited in this application. In addition, S3 may be preset based on a requirement. This is not limited in this application. Clip3 is a clamp function.

For example, the second preset condition is: {flatness is less than or equal to (QpRefineTh1 << (bdIdx >> 1))}, {flatness is greater than (QpRefineTh0 << (bdIdx >> 1)), and/or a complexity level of a coding unit is less than BwqComplexTh}. A second quantization parameter determining manner is QP_intra=Max(QP_IBC-S1, 0). QpRefineTh1 is a 1^{st} gradient threshold of quantization parameter adjustment, and S1 is an adjustment step (namely, the second preset step, for example, S1=1) corresponding to the 1^{st} gradient threshold. QpRefineTh0 is less than QpRefineTh1.

For example, the third preset condition is that flatness is greater than (QpRefineTh1 << (bdIdx >> 1)). A third quantization parameter determining manner is QP_intra=QP_IBC.

According to any one of the first aspect or the foregoing implementations of the first aspect, determining the flatness of the current subblock includes: determining the flatness of the current subblock based on a reconstructed subblock adjacent to the current subblock.

For example, a difference between reconstructed values of adjacent pixels in a previous row of the current subblock may be calculated, to obtain a plurality of differences; and absolute values of the plurality of differences are added, to obtain the flatness of the current subblock.

According to a second aspect, an embodiment of this application provides an encoding method. The method includes: obtaining a coding unit CU, and dividing the CU into a plurality of subblocks, where a prediction mode of the CU is an intra block copy IBC mode; for the current subblock, determining whether to use another intra prediction mode to replace the IBC mode; if it is determined that the another intra prediction mode is to be used to replace the IBC mode, setting a BV of the current subblock to first preset information, and setting a predicted value of the current subblock to a first predicted value, where the BV set to the first preset information indicates that a prediction mode of the current subblock is the another intra prediction mode, and the first predicted value is determined through other intra prediction; or if it is determined that the another intra prediction mode is not to be used to replace the IBC mode, setting a block vector BV of the current subblock to second preset information, and setting a predicted value of the current subblock to a second predicted value, where the BV set to the second preset information indicates that a prediction mode of the current subblock is the IBC mode, the second preset information is a vector absolute value offset value between the current subblock and a reference block, and the reference block and the second predicted value are determined through IBC prediction; encoding the current subblock based on the predicted value of the current subblock, to obtain a bitstream of the current subblock; and writing the BV of the current subblock into the bitstream of the current subblock.

For example, a predicted residual between the predicted value of the current subblock and the current subblock may be calculated; and entropy encoding is performed on the predicted residual, to obtain the bitstream of the current subblock.

For example, the first preset information and the second preset information are different.

For example, the first preset information may be set based on a requirement. For example, when the another intra prediction mode is a vertical prediction mode, the first preset information may be a preset value Y1. For example, when the another intra prediction mode is an angle prediction mode, the first preset information may be a preset value Y2. For example, when the another intra prediction mode is a DC prediction mode, the first preset information may be a preset value Y3.

For example, the second preset information may be obtained by calculating an absolute value of a difference between horizontal coordinates of the current subblock and horizontal coordinates of the reference block.

For example, a quantity of subblocks and a size of the subblock are not limited in this application. For example, a decoder may divide the CU into a plurality of subblocks of a same size.

For example, a to-be-encoded image may be first divided into a plurality of CUs. The encoding method in the second aspect may be used for a CU whose prediction mode is the IBC mode. Bitstreams of the plurality of subblocks included in the CU may be cascaded to obtain a bitstream of the CU.

According to the second aspect, for the current subblock, determining whether to use the another intra prediction mode to replace the IBC mode includes: performing IBC prediction on the current subblock, to determine the reference block; and calculating a sum of absolute differences between the current subblock and the reference block, to obtain SDA_IBC; performing other intra prediction on the current subblock, to obtain the first predicted value; and calculating a sum of absolute differences between the current subblock and the first predicted value, to obtain SDA_intra; and for the current subblock, determining, based on SDA_IBC and SDA_intra, whether to use the another intra prediction mode to replace the IBC mode.

According to any one of the second aspect or the foregoing implementations of the second aspect, for the current subblock, determining, based on SDA_IBC and SDA_intra, whether to use the another intra prediction mode to replace the IBC mode includes: determining a sum of SDA_IBC and a preset bias, where the preset bias is a bias for the another intra prediction mode; determining whether SDA_intra is less than the sum; and when SDA_intra is less than the sum, for the current subblock, determining to use the another intra prediction mode to replace the IBC mode. The preset bias may be set based on a requirement. In this way, a bias for the vertical prediction mode can be flexibly set based on an encoding scenario, and a better intra prediction mode can be selected for each subblock in the CU. Further, prediction accuracy is improved.

According to any one of the second aspect or the foregoing implementations of the second aspect, determining, based on SDA_IBC and SDA_intra, whether to use the another intra prediction mode to replace the IBC mode further includes: when SDA_intra is less than the sum, determining whether SDA_intra is less than SDA_TH, where SDA_TH is a maximum upper limit value of a sum of absolute differences corresponding to the another intra prediction mode; and when SDA_intra is less than SDA_TH, for the current subblock, determining to use the another intra prediction mode to replace the IBC mode. In this way, prediction accuracy of the another intra prediction mode can be improved, thereby improving compression performance.

According to any one of the second aspect or the foregoing implementations of the second aspect, the another intra prediction mode is a vertical prediction mode, and the first predicted value is determined through vertical prediction.

According to any one of the second aspect or the foregoing implementations of the second aspect, determining the sum of absolute differences between the current subblock and the first predicted value, to obtain SDA_intra includes: calculating sums of absolute differences between the current subblock and R first predicted values, to obtain R sums of absolute differences SDA_R, where one first predicted value is determined based on one another intra prediction mode, and R is a positive integer; and using SDA_R with a smallest value as SDA_intra; and the method further includes: selecting a preset value from R preset values as the first preset information based on another intra prediction mode corresponding to SDA_R with the smallest value. The R preset values are in one-to-one correspondence with R other intra prediction modes, the BV set to the first preset information indicates the prediction mode of the current subblock, which is the another intra prediction mode corresponding to SDA_R with the smallest value, and the first predicted value is determined based on the another intra prediction mode corresponding to SDA_R with the smallest value.

That is, an encoder may select one another intra prediction mode from the R other intra prediction modes; and for the current subblock, determine whether to select one intra prediction mode to replace the IBC mode. In this way, any one or more of R other intra encoding manners can be nested into the IBC mode, so that prediction flexibility of the CU coding unit can be further improved, and prediction accuracy can be further improved.

According to any one of the second aspect or the foregoing implementations of the second aspect, when it is determined that the another intra prediction mode is to be used to replace the IBC mode, the method further includes: determining flatness of the current subblock; and determining a quantization parameter QP_intra corresponding to the current subblock based on the flatness of the current subblock; and encoding the current subblock based on the predicted value of the current subblock, to obtain the bitstream of the current subblock includes: quantizing a predicted residual between the current subblock and the predicted value of the current subblock based on the quantization parameter QP_intra corresponding to the current subblock; and performing entropy encoding on the quantized predicted residual, to obtain the bitstream of the current subblock.

According to any one of the second aspect or the foregoing implementations of the second aspect, determining the quantization parameter QP_intra corresponding to the current subblock based on the flatness of the current subblock includes: determining complexity information of the CU and a quantization parameter QP_IBC corresponding to the CU; and determining the quantization parameter QP_intra corresponding to the current subblock based on the flatness of the current subblock, the complexity information, and the quantization parameter QP_IBC.

According to any one of the second aspect or the foregoing implementations of the second aspect, determining the quantization parameter QP_intra corresponding to the current subblock based on the flatness of the current subblock, the complexity information, and the quantization parameter QP_IBC includes: when the flatness of the current subblock and the complexity information meet a first preset condition, determining the quantization parameter QP_intra corresponding to the current subblock based on the quantization parameter QP_IBC and a first preset step; when the flatness of the current subblock and the complexity information meet a second preset condition, determining the quantization parameter QP_intra corresponding to the current subblock based on the quantization parameter QP_IBC and a second preset step; and when the flatness of the current subblock and the complexity information meet a third preset condition, using the quantization parameter QP_IBC as the quantization parameter QP_intra corresponding to the current subblock.

According to any one of the second aspect or the foregoing implementations of the second aspect, determining the flatness of the current subblock includes: determining the flatness of the current subblock based on a reconstructed subblock adjacent to the current subblock.

Any one of the second aspect and the implementations of the second aspect corresponds to any one of the first aspect and the implementations of the first aspect. For technical effect corresponding to any one of the second aspect and the implementations of the second aspect, refer to technical effect corresponding to any one of the first aspect and the implementations of the first aspect. Details are not described herein again.

According to a third aspect, an embodiment of this application provides an electronic device, including a memory and a processor. The memory is coupled to the processor. The memory stores program instructions. When the program instructions are executed by the processor, the electronic device is enabled to perform the decoding method according to any one of the first aspect or the possible implementations of the first aspect.

Any one of the third aspect and the implementations of the third aspect corresponds to any one of the first aspect and the implementations of the first aspect. For technical effect corresponding to any one of the third aspect and the implementations of the third aspect, refer to technical effect corresponding to any one of the first aspect and the implementations of the first aspect. Details are not described herein again.

According to a fourth aspect, an embodiment of this application provides an electronic device, including a memory and a processor. The memory is coupled to the processor. The memory stores program instructions. When the program instructions are executed by the processor, the electronic device is enabled to perform the encoding method according to any one of the second aspect or the possible implementations of the second aspect.

Any one of the fourth aspect and the implementations of the fourth aspect corresponds to any one of the second aspect and the implementations of the second aspect. For technical effect corresponding to any one of the fourth aspect and the implementations of the fourth aspect, refer to the technical effect corresponding to any one of the second aspect and the implementations of the second aspect. Details are not described herein again.

According to a fifth aspect, an embodiment of this application provides a chip, including one or more interface circuits and one or more processors. The one or more processors receive or send data through the one or more interface circuits. When the one or more processors execute computer instructions, the electronic device is enabled to perform the decoding method in any one of the first aspect or the possible implementations of the first aspect.

Any one of the fifth aspect and the implementations of the fifth aspect corresponds to any one of the first aspect and the implementations of the first aspect. For technical effect corresponding to any one of the fifth aspect and the implementations of the fifth aspect, refer to the technical effect corresponding to any one of the first aspect and the implementations of the first aspect. Details are not described herein again.

According to a sixth aspect, an embodiment of this application provides a chip, including one or more interface circuits and one or more processors. The one or more processors receive or send data through the one or more interface circuits. When the one or more processors execute computer instructions, the electronic device is enabled to perform the encoding method in any one of the second aspect or the possible implementations of the second aspect.

Any one of the sixth aspect and the implementations of the sixth aspect corresponds to any one of the second aspect and the implementations of the second aspect. For technical effect corresponding to any one of the sixth aspect and the implementations of the sixth aspect, refer to technical effect corresponding to any one of the second aspect and the implementations of the second aspect. Details are not described herein again.

According to a seventh aspect, an embodiment of this application provides a computer-readable storage medium. The computer-readable storage medium stores a computer program, and when the computer program is run on a computer or a processor, the computer or the processor is enabled to perform the decoding method according to any one of the first aspect or the possible implementations of the first aspect.

Any one of the seventh aspect and the implementations of the seventh aspect corresponds to any one of the first aspect and the implementations of the first aspect. For technical effect corresponding to any one of the seventh aspect and the implementations of the seventh aspect, refer to the technical effect corresponding to any one of the first aspect and the implementations of the first aspect. Details are not described herein again.

According to an eighth aspect, an embodiment of this application provides a computer-readable storage medium. The computer-readable storage medium stores a computer program, and when the computer program is run on a computer or a processor, the computer or the processor is enabled to perform the encoding method according to any one of the second aspect or the possible implementations of the second aspect.

Any one of the eighth aspect and the implementations of the eighth aspect corresponds to any one of the second aspect and the implementations of the second aspect. For technical effect corresponding to any one of the eighth aspect and the implementations of the eighth aspect, refer to technical effect corresponding to any one of the second aspect and the implementations of the second aspect. Details are not described herein again.

According to a ninth aspect, an embodiment of this application provides a computer program product. The computer program product includes computer instructions, and when the computer instructions are executed by a computer or a processor, the computer or the processor is enabled to perform the decoding method in any one of the first aspect or the possible implementations of the first aspect.

Any one of the ninth aspect and the implementations of the ninth aspect corresponds to any one of the first aspect and the implementations of the first aspect. For technical effect corresponding to any one of the ninth aspect and the implementations of the ninth aspect, refer to the technical effect corresponding to any one of the first aspect and the implementations of the first aspect. Details are not described herein again.

According to a tenth aspect, an embodiment of this application provides a computer program product. The computer program product includes computer instructions, and when the computer instructions are executed by a computer or a processor, the computer or the processor is enabled to perform the encoding method in any one of the second aspect or the possible implementations of the second aspect.

Any one of the tenth aspect and the implementations of the tenth aspect corresponds to any one of the second aspect and the implementations of the second aspect. For technical effect corresponding to any one of the tenth aspect and the implementations of the tenth aspect, refer to the technical effect corresponding to any one of the second aspect and the implementations of the second aspect. Details are not described herein again.

According to an eleventh aspect, an embodiment of this application provides a bitstream storage apparatus. The apparatus includes a receiver and at least one storage medium. The receiver is configured to receive a bitstream. The at least one storage medium is configured to store the bitstream. The bitstream is generated according to any one of the second aspect and the implementations of the second aspect.

Any one of the eleventh aspect and the implementations of the eleventh aspect corresponds to any one of the second aspect and the implementations of the second aspect. For technical effect corresponding to any one of the eleventh aspect and the implementations of the eleventh aspect, refer to technical effect corresponding to any one of the second aspect and the implementations of the second aspect. Details are not described herein again.

According to a twelfth aspect, an embodiment of this application provides a bitstream transmission apparatus. The apparatus includes a transmitter and at least one storage medium. The at least one storage medium is configured to store a bitstream. The bitstream is generated according to any one of the second aspect and the implementations of the second aspect. The transmitter is configured to: obtain the bitstream from the storage medium, and send the bitstream to a device-side device through a transmission medium.

Any one of the twelfth aspect and the implementations of the twelfth aspect corresponds to any one of the second aspect and the implementations of the second aspect. For technical effect corresponding to any one of the twelfth aspect and the implementations of the twelfth aspect, refer to the technical effect corresponding to any one of the second aspect and the implementations of the second aspect. Details are not described herein again.

According to a thirteenth aspect, an embodiment of this application provides a bitstream distribution system. The system includes: at least one storage medium, configured to store at least one bitstream, where the at least one bitstream is generated according to any one of the second aspect and the implementations of the second aspect; and a streaming media device, configured to: obtain a target bitstream from the at least one storage medium, and send the target bitstream to a device-side device, where the streaming media device includes a content server or a content delivery server.

Any one of the thirteenth aspect and the implementations of the thirteenth aspect corresponds to any one of the second aspect and the implementations of the second aspect. For technical effect corresponding to any one of the thirteenth aspect and the implementations of the thirteenth aspect, refer to the technical effect corresponding to any one of the second aspect and the implementations of the second aspect. Details are not described herein again.

### BRIEF DESCRIPTION OF DRAWINGS

FIG. 1a is a diagram of an example application scenario;
FIG. 1b is a diagram of a structure of an example encoder and an example decoder;
FIG. 2a is a diagram of an example encoding procedure;
FIG. 2b is a diagram of an example encoding process;
FIG. 3a is a diagram of an example decoding procedure;
FIG. 3b is a diagram of an example decoding process;
FIG. 4a is a diagram of an example encoding process;
FIG. 4b is a diagram of an example search area for IBC prediction;
FIG. 4c is a diagram of an example reference block obtained through vertical prediction;
FIG. 5 is a diagram of an example decoding process;
FIG. 6A and FIG. 6B are a diagram of an example encoding process;
FIG. 7 is a diagram of an example decoding process;
FIG. 8a is a diagram of an example encoding procedure;
FIG. 8b-1 and FIG. 8b-2 are a diagram of an example encoding process;

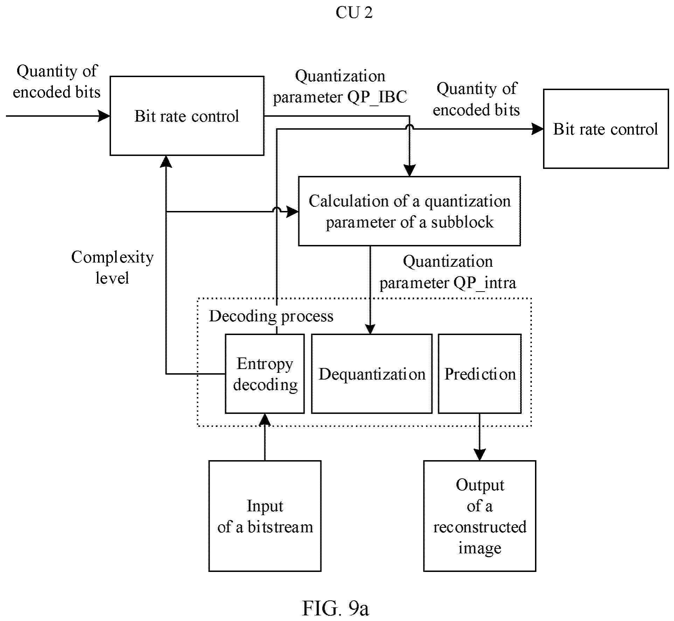

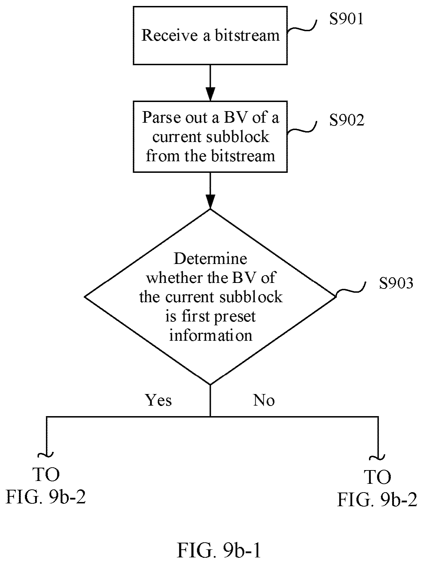

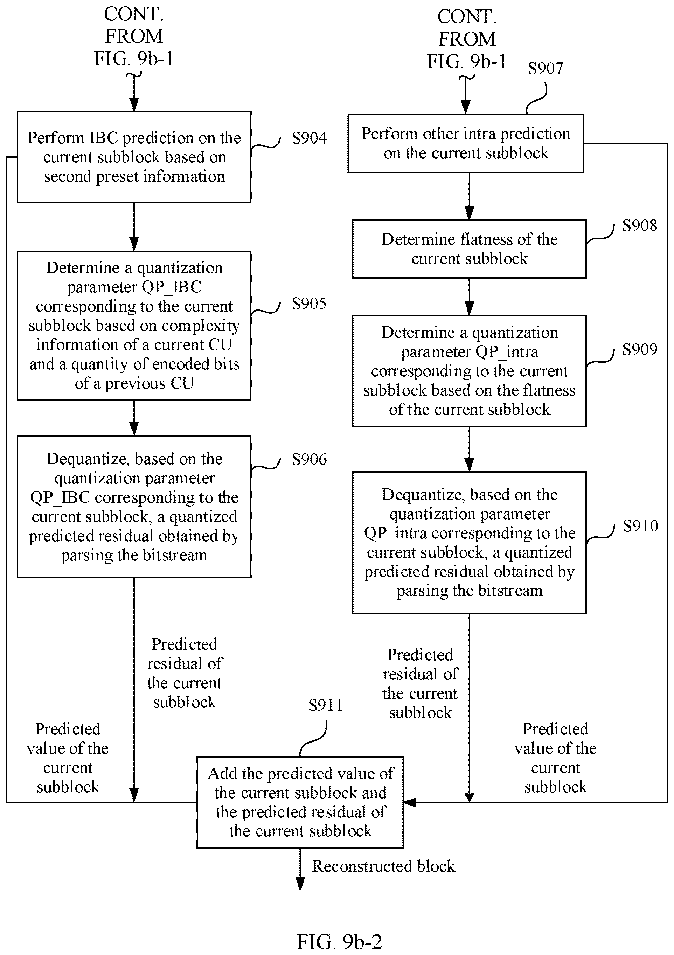

FIG. 9a is a diagram of an example decoding procedure;
FIG. 9b-1 and FIG. 9b-2 are a diagram of an example decoding process; and

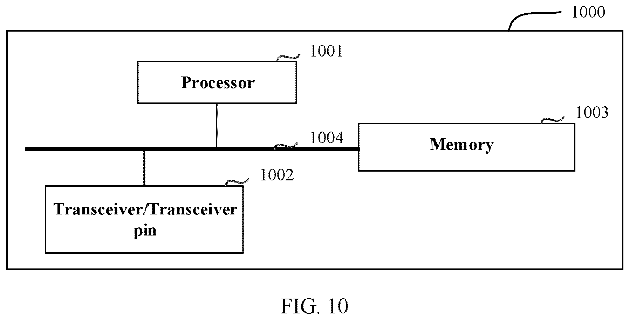

FIG. 10 is a diagram of a structure of an example apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims of embodiments of this application, the terms such as "first" and "second" are intended to distinguish between different objects but do not indicate a particular order of the objects. For example, a first target object, a second target object, and the like are used to distinguish between different target objects, but do not indicate a particular order of the target objects.

In embodiments of this application, the word such as "example" or "for example" represents giving an example, an illustration, or a description. Any embodiment or design solution described as an "example" or "for example" in embodiments of this application should not be explained as being more preferred or having more advantages than another embodiment or design solution. To be precise, use of the word such as "example" or "for example" is intended to present a relative concept in a specific manner.

In descriptions of embodiments of this application, unless otherwise specified, "a plurality of" means two or more. For example, a plurality of processing units are two or more processing units, and a plurality of systems are two or more systems.

An encoding and decoding method in this application may be applied to various video service scenarios such as a video conference scenario, a video telephone scenario, an online education scenario, a remote tutoring scenario, a low-latency live streaming scenario, a cloud game scenario, a wireless screen projection scenario, and a wireless extended screen scenario. This is not limited in embodiments of this application.

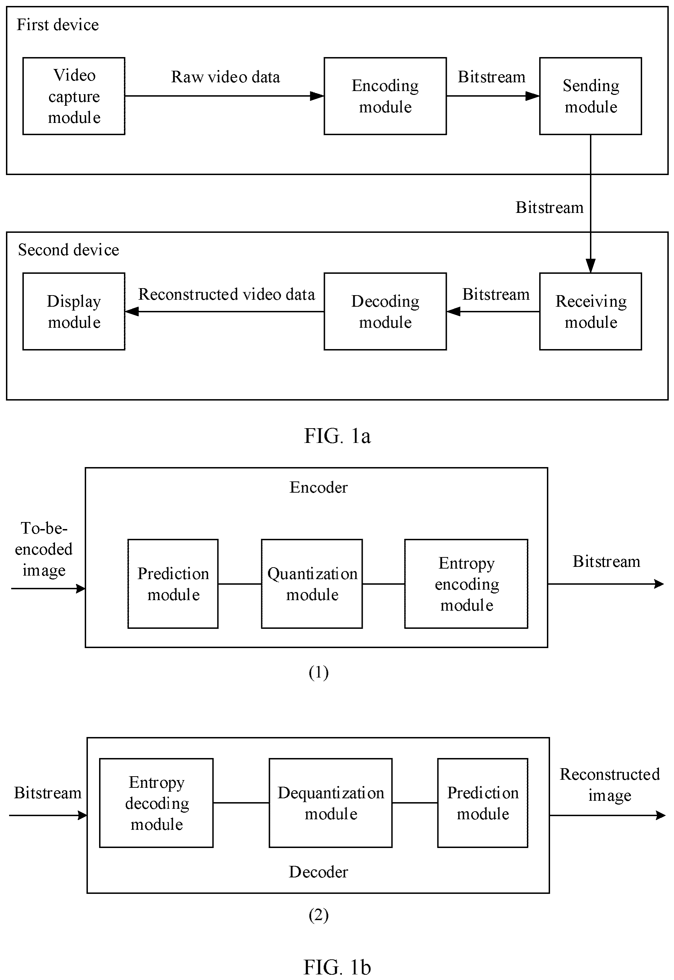

FIG. 1a is a diagram of an example application scenario.

As shown in FIG. 1a, for example, a first device may include a video capture module, an encoding module (or an encoder), and a sending module. For example, the encoding module may be a software module, or may be a hardware module. This is not limited in this embodiment of this application. It should be understood that FIG. 1a shows only an example of the first device. In some other embodiments of this application, the first device has more modules than those shown in FIG. 1a. This is not limited in this embodiment of this application.

As shown in FIG. 1a, for example, a second device may include a display module, a decoding module (or a decoder), and a receiving module. For example, the decoding module may be a software module, or may be a hardware module. This is not limited in this embodiment of this application. It should be understood that FIG. 1a shows only an example of the second device. In some other embodiments of this application, the second device has more modules than those shown in FIG. 1a. This is not limited in this embodiment of this application.

Still as shown in FIG. 1a, for example, after the video capture module of the first device collects raw video data, a process of sending the collected raw video data to the second device for display is as follows: The video capture module may output the collected raw video data to the encoding module. Next, the encoding module may encode the raw video data, to obtain a bitstream (the bitstream may also be referred to as a bitstream or a bitstream), and output the bitstream obtained through encoding to the sending module. Then, the sending module may send the bitstream to the second device. Subsequently, the receiving module of the second device may receive the bitstream, and then output the bitstream to the decoding module. Then, the decoding module may decode the bitstream, to obtain reconstructed video data, and output the reconstructed video data to the display module. The display module displays the reconstructed video data.

For example, the first device includes but is not limited to a server, a PC (Personal Computer, Personal Computer), a notebook computer, a tablet computer, a mobile phone, and a watch.

For example, the second device includes but is not limited to a PC, a notebook computer, a tablet computer, a mobile phone, and a watch.

For example, in a video conference scenario, the first device may be a PC or a laptop, and the second device may be a PC or a laptop.

For example, in an online education scenario, the first device may be a PC or a notebook computer, and the second device may be a tablet computer.

For example, in a cloud game scenario, the first device may be a server, and the second device may be a tablet computer, a PC, a laptop computer, or a mobile phone.

It should be understood that this application may be further applied to an image encoding and decoding scenario. This is not limited in this application.

FIG. 1b is a diagram of a structure of an example encoder and an example decoder.

As shown in (1) in FIG. 1b, for example, the encoder may include a prediction module, a quantization module, and an entropy encoding module. The prediction module may be configured to perform encoded prediction (for example, inter prediction and intra prediction). The quantization module may perform quantization based on a quantization parameter. The entropy encoding module may be configured to perform entropy encoding (for example, arithmetic coding or Huffman coding). For example, after a to-be-encoded image is input into the encoder, the encoder sequentially inputs the to-be-encoded image into the prediction module, the quantization module, and the entropy encoding module for processing, and outputs a bitstream.

It should be understood that the encoder in this application may include more modules than those shown in (1) in FIG. 1b. For example, the encoder may further include a bit rate control module (which adjusts an output bit rate by changing an encoding quantization parameter, an encoding mode, and the like). This is not limited in this application.

As shown in (2) in FIG. 1b, for example, the decoder may include a prediction module, a dequantization module, and an entropy decoding module. The entropy decoding module is configured to perform entropy decoding. The dequantization module is configured to perform dequantization based on a quantization parameter. The prediction module is configured to perform decoded prediction. For example, after a bitstream is input into the decoder, the bitstream is sequentially processed by the entropy decoding module, the dequantization module, and the prediction module, and a reconstructed image is output.

It should be understood that the decoder in this application may include more modules than that shown in (2) in FIG. 1b. For example, the decoder may further include a bit rate control module (configured to determine the quantization parameter). This is not limited in this application.

The following describes an encoding and decoding process (namely, an intra encoding process and an intra decoding process) by using an example in which the prediction module in FIG. 1b is used for intra prediction.

To resolve a problem in the conventional technology that a coding unit whose prediction mode is an IBC mode has high search costs (for example, low search efficiency, a high computational power requirement, and high hardware costs), this application provides an encoding and decoding method for a coding unit whose prediction mode is an IBC mode. One idea of the encoding and decoding method is as follows: Another intra prediction mode is nested into the IBC mode, and a block vector (Block Vector, BV) of each subblock is used for identification. That is, the BV not only may be a vector absolute value offset value between a subblock and a corresponding reference block, but also may indicate that the prediction mode is the another intra prediction mode. In this way, neither a bit rate nor a search area for IBC prediction is increased. In addition, coding unit prediction flexibility can be further increased, prediction at a finer granularity is implemented, prediction accuracy is improved, and compression performance is improved.

The another intra prediction mode may be an intra prediction mode other than the IBC mode, for example, a vertical prediction mode, an angle prediction mode, and a direct current (Direct Current, DC) prediction mode. This is not limited in this application.

The following describes the encoding and decoding method in this application by using an example in which an image is encoded and decoded.

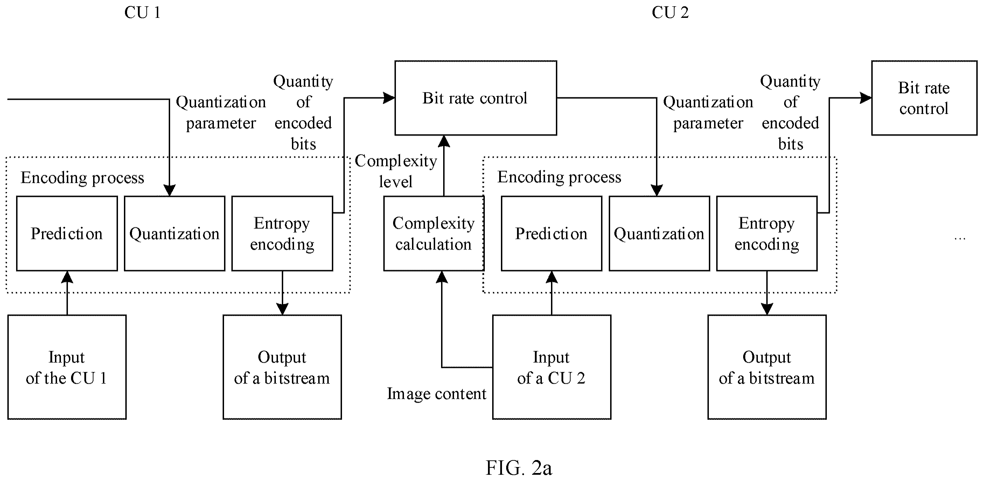

FIG. 2a is a diagram of an example encoding procedure.

As shown in FIG. 2a, for example, after a to-be-encoded image is input to an encoder, the encoder may divide the to-be-encoded image into a plurality of coding units (Coding Unit, CU) such as a CU 1, CU 2, .... Then, a bitstream of the CU 1 may be obtained by sequentially performing prediction, quantization, and entropy encoding operations on the CU 1; and a bitstream of the CU 2 may be obtained by sequentially performing prediction, quantization, and entropy encoding operations on the CU 2. By analogy, after encoding of all the CUs of the to-be-encoded image is completed, bitstreams of all the CUs are cascaded to obtain a bitstream of the to-be-encoded image.

In a process of encoding the CU 1, quantization may be performed based on a preset quantization parameter. In a process of encoding a subsequent another CU, complexity information (for example, a complexity level) of a current CU may be first determined based on image content of the current CU. Then, bit rate control is performed based on a quantity of encoded bits of a previous CU and the complexity level of the current CU (bit rate control is performed by a bit rate control module, that is, an output bit rate is adjusted by changing an encoding quantization parameter, an encoding mode, and the like through analysis of the quantity of encoded bits of the previous CU and the complexity level of the current CU), to obtain a quantization parameter. Then, a quantization module may perform quantization based on the quantization parameter determined through bit rate control. The encoder may further write the complexity information of the CU into the bitstream of the CU, so that the decoder obtains the complexity information of the CU from the bitstream, to determine a quantization parameter required for dequantization.

It should be understood that the bit rate control module may further perform bit rate control based on only the quantity of encoded bits (or buffer fullness) of the previous CU, and output the quantization parameter. In other words, a manner in which the bit rate control module determines the quantization parameter is not limited in this application. This application provides descriptions by using an example in which the bit rate control module performs bit rate control based on the quantity of encoded bits of the previous CU and the complexity information of the current CU.

The following describes an encoding process by using, as an example, a CU whose prediction mode is an IBC mode.

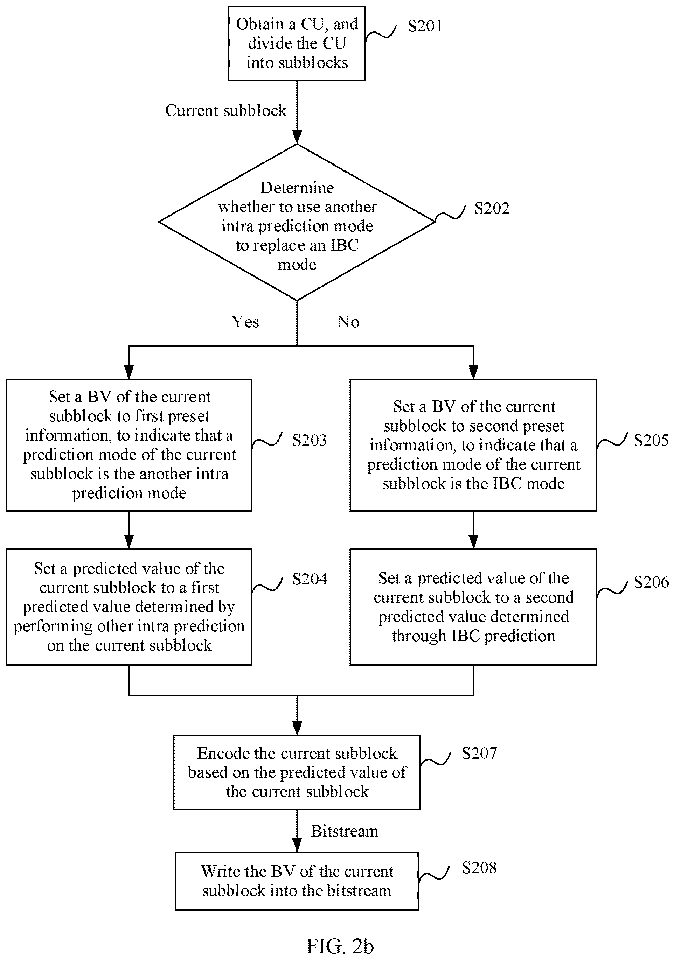

FIG. 2b is a diagram of an example encoding process.

S201: Obtain a coding unit CU, and divide the CU into a plurality of subblocks, where a prediction mode of the CU is an IBC mode.

For example, for a CU whose prediction mode is the IBC mode, an encoder may divide the CU into a plurality of subblocks. A quantity of subblocks and a size of the subblock are not limited in this application. For example, a decoder may divide the CU into a plurality of subblocks of a same size.

The following provides descriptions by using one subblock as an example.

S202: For a current subblock, determine whether to use another intra prediction mode to replace the IBC mode.

For example, for the current subblock, whether intra prediction is still performed in the IBC mode, or intra prediction is performed in the another intra prediction mode may be determined. That is, for the current subblock, whether to use the another intra prediction mode to replace the IBC mode is determined. A specific determining manner is described subsequently.

For example, for the current subblock, S203 may be performed when it is determined that the another intra prediction mode is to be used to replace the IBC mode; or for the current subblock, S205 may be performed when it is determined that the another intra prediction mode is not to be used to replace the IBC mode.

S203: Set a BV of the current subblock to first preset information, where the BV set to the first preset information indicates that a prediction mode of the current subblock is the another intra prediction mode.

For example, when it is determined that the another intra prediction mode is to be used to replace the IBC mode, the BV of the current subblock may be set to the first preset information. In this case, the BV set to the first preset information may indicate that the prediction mode of the current subblock is the another intra prediction mode.

The first preset information may be set based on a requirement. For example, when the another intra prediction mode is a vertical prediction mode, the first preset information may be a preset value Y1. For example, when the another intra prediction mode is an angle prediction mode, the first preset information may be a preset value Y2. For example, when the another intra prediction mode is a DC prediction mode, the first preset information may be a preset value Y3.

S204: Set a predicted value of the current subblock to a first predicted value, where the first predicted value is determined through other intra prediction.

For example, when it is determined that the another intra prediction mode is to be used to replace the IBC mode, the predicted value of the current subblock may be further set to the first predicted value determined by performing other intra prediction on the current subblock.

S205: Set a BV of the current subblock to second preset information, where the BV set to the second preset information indicates that a prediction mode of the current subblock is the IBC mode, the second preset information is a vector absolute value offset value between the current subblock and a reference block, and the reference block is determined through IBC prediction.

For example, when it is determined that the another intra prediction mode is not to be used to replace the IBC mode, the vector absolute value offset value (which may be represented by using the second preset information) between the current subblock and the reference block may be used as the BV of the current subblock. The reference block is determined by performing IBC prediction on the current subblock. In this case, the BV set to the second preset information may indicate that the prediction mode of the current subblock is the IBC mode.

S206: Set a predicted value of the current subblock to a second predicted value, where the second predicted value is determined through IBC prediction.

For example, for the current subblock, when it is determined that the another intra prediction mode is not to be used to replace the IBC mode, the predicted value of the current subblock may be set to the second predicted value determined by performing IBC prediction on the current subblock.

It should be noted that, in this application, a search area corresponding to IBC prediction is a left area (not including an upper left corner area of the current subblock) of the current subblock, and the second predicted value is determined based on a reconstructed value of the reference block. The reconstructed value of the reference block is the second predicted value.

The second preset information may be obtained by calculating an absolute value of a difference between horizontal coordinates of the current subblock and horizontal coordinates of the reference block.

It should be noted that the second preset information and the first preset information are different.

S207: Encode the current subblock based on the predicted value of the current subblock, to obtain a bitstream of the current subblock.

For example, a predicted residual between the predicted value of the current subblock and the current subblock may be calculated; the predicted residual may be quantized based on a quantization parameter; and entropy encoding may be performed on the quantized predicted residual, to obtain the bitstream of the current subblock.

S208. Write the BV of the current subblock into the bitstream.

For example, the BV of the current subblock may be written into the bitstream, so that the decoder can determine the prediction mode of the current subblock.

For example, bitstreams of the plurality of subblocks included in the CU may be cascaded to obtain a bitstream of the CU.

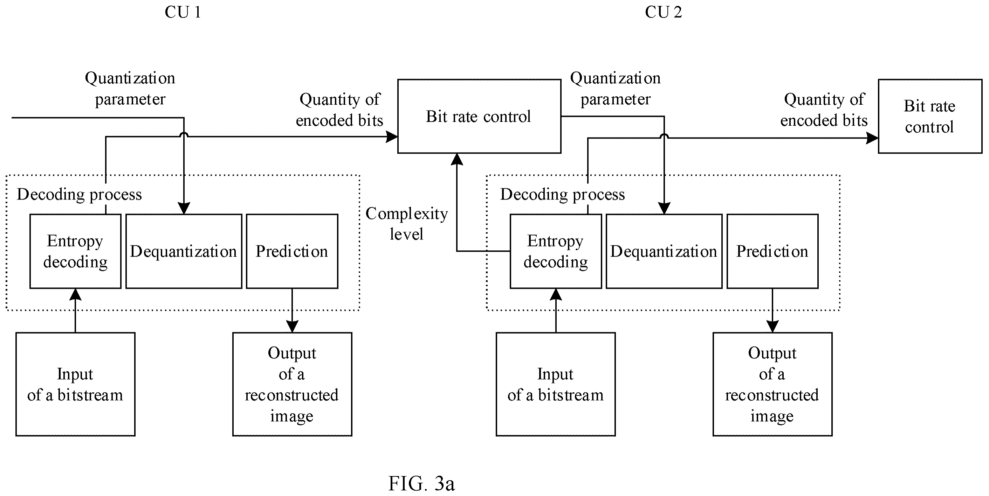

FIG. 3a is a diagram of an example decoding procedure.

As shown in FIG. 3a, for example, after a bitstream of a CU 1 is input into a decoder, the decoder may sequentially perform operations such as entropy decoding, dequantization, and prediction, to output a reconstructed image of the CU 1. Then, after a bitstream of a CU 2 is input into an decoder, the decoder may sequentially perform operations such as entropy decoding, dequantization, and prediction, to output a reconstructed image of the CU 2. By analogy, after decoding of all CUs of a same image is completed, reconstructed images of all the CUs may be stitched to obtain a complete image.

In a process of decoding the CU 1, dequantization may be performed based on a preset quantization parameter. In a process of decoding a subsequent another CU, bit rate control may be performed based on complexity information (for example, a complexity level) parsed out (namely, entropy decoding) from a bitstream of a current CU and a quantity of encoded bits of a previous CU, to determine a quantization parameter; and then, a dequantization module may perform dequantization based on the quantization parameter determined through bit rate control.

The following describes a decoding process by using, as an example, a subblock of a CU whose prediction mode is an IBC mode.

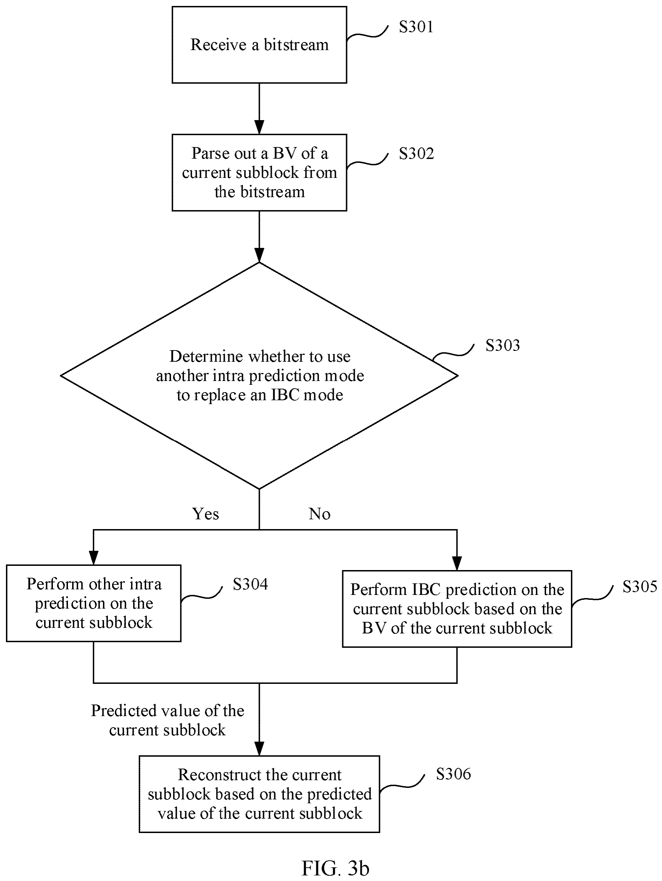

FIG. 3b is a diagram of an example decoding process. A decoding process in FIG. 3b corresponds to the encoding process in FIG. 2b.

S301: Receive a bitstream.

S302: Parse out a BV of a current subblock from the bitstream, where an intra prediction mode of a coding unit CU to which the current subblock belongs is an IBC mode.

For example, an encoder writes the BV of the current subblock into the bitstream. Further, after receiving the bitstream, a decoder may parse out (namely, entropy decoding) the BV of the current subblock from the bitstream.

S303: For the current subblock, determine, based on the BV of the current subblock, whether to use another intra prediction mode to replace the IBC mode.

For example, the encoder nests the another intra encoding mode into the IBC mode. After parsing out the BV of the current subblock from the bitstream, the decoder may determine, based on the BV of the current subblock, whether a prediction mode of the current subblock is the IBC mode or the another intra prediction mode. That is, for the current subblock, whether to use the another intra prediction mode to replace the IBC mode is determined based on the BV of the current subblock.

For example, whether the BV of the current subblock is first preset information may be determined, and for the current subblock, whether to use the another intra prediction mode to replace the IBC mode is determined. If the BV of the current subblock is the first preset information, for the current subblock, it may be determined that the another intra prediction mode is to be used to replace the IBC mode. In this case, S304 may be performed. If the BV of the current subblock is not the first preset information, it may be determined that the BV of the current subblock is second preset information. In this case, for the current subblock, it may be determined that the another intra prediction mode is not to be used to replace the IBC mode. In this case, S305 may be performed.

S304: Perform other intra prediction on the current subblock, to obtain a predicted value of the current subblock.

For example, for the current subblock, when it is determined that the another intra prediction mode is to be used to replace the IBC mode, other intra prediction may be performed on the current subblock, to obtain the predicted value of the current subblock.

S305: Perform IBC prediction on the current subblock based on the BV of the current subblock, to obtain a predicted value of the current subblock.

For example, for the current subblock, when it is determined that the another intra prediction mode is not to be used to replace the IBC mode, IBC prediction may be performed on the current subblock based on the BV (namely, the second preset information) of the current subblock, to obtain the predicted value of the current subblock.

For example, a reference block of the current subblock may be determined from a decoded subblock based on location coordinates of the current subblock and the second preset information. A reconstructed value of the reference block of the current subblock is used as the predicted value of the current subblock.

S306: Reconstruct the current subblock based on the predicted value of the current subblock, to obtain a reconstructed block of the current subblock.

For example, after receiving the bitstream, the decoder may further parse out (namely, entropy decoding) a quantized predicted residual from the bitstream; and then dequantize the quantized predicted residual, to obtain a predicted residual of the current subblock. Then, the predicted value of the current subblock and the predicted residual of the current subblock may be added, to obtain the reconstructed block of the current subblock.

For example, reconstructed blocks of a plurality of subblocks included in the CU may be stitched to obtain a reconstructed image of the CU.

Therefore, encoding and decoding are performed in the encoding method in the embodiment in FIG. 2b and the decoding method in FIG. 3b, neither a bit rate nor a search area for IBC prediction is increased. In addition, coding unit prediction flexibility can be further increased, prediction at a finer granularity is implemented, prediction accuracy is improved, and compression efficiency is improved.

The following describes an encoding and decoding process by using an example in which another intra prediction mode is a vertical prediction mode.

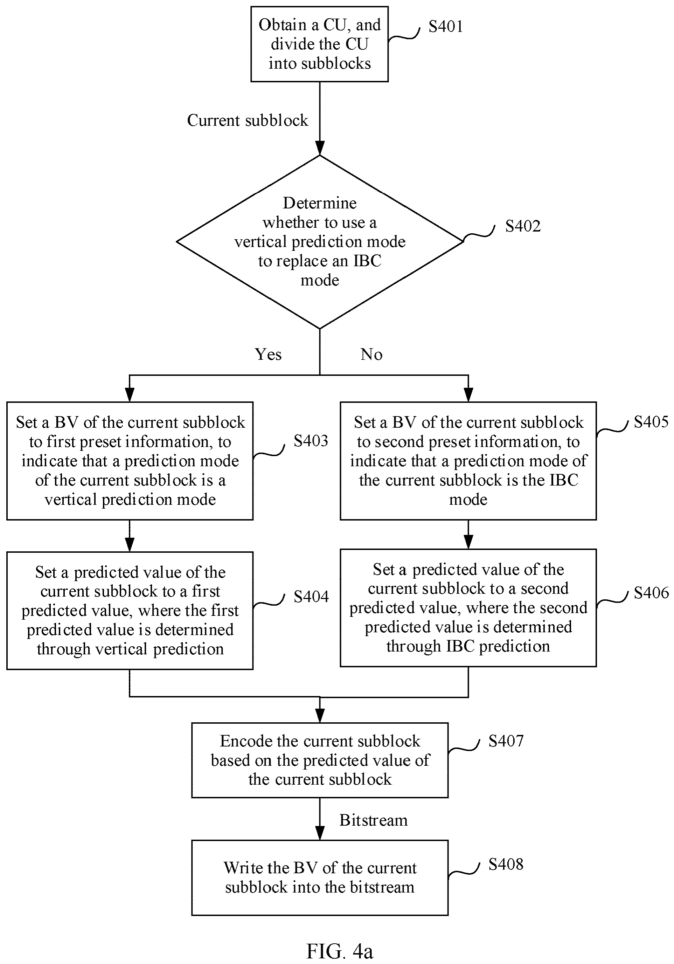

FIG. 4a is a diagram of an example encoding process.

S401: Obtain a coding unit CU, and divide the CU into a plurality of subblocks, where a prediction mode of the CU is an IBC mode.

For example, for S401, refer to the foregoing descriptions of S201. Details are not described herein again.

S402: For a current subblock, determine whether to use a vertical prediction mode to replace the IBC mode.

For example, for the current subblock, whether intra prediction is still performed in the IBC mode, or intra prediction is performed in the vertical prediction mode may be determined. That is, for the current subblock, whether to use the vertical prediction mode to replace the IBC mode is determined. A specific determining process may be S4021 to S4023:

S4021: Perform IBC prediction on the current subblock, to determine a reference block; and calculate a sum of absolute differences (Sum of Absolute Differences, SDA) between the current subblock and the reference block, to obtain SDA_IBC.

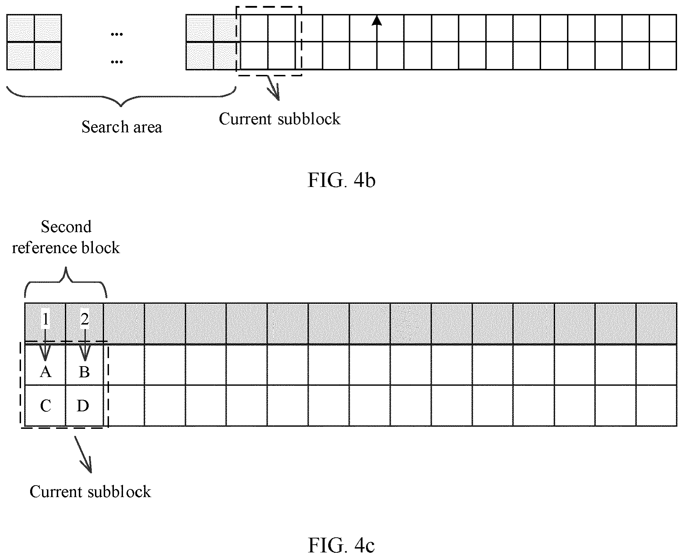

For example, a search area corresponding to IBC prediction in this application is a left area of the current subblock. As shown in FIG. 4b, a size of each subblock is 2*2, a gray subblock is an encoded subblock, a white subblock is a non-encoded subblock, and a subblock in a dashed box is the current subblock. The left area of the current subblock may be used as the search area, as shown in FIG. 4b.

For example, the search area may include n candidate reference blocks (n is a positive integer and may be set based on a requirement, and this is not limited in this application). A vector absolute value offset value between a 1^{st} candidate reference block and the current subblock may be set to X1 (the 1^{st} candidate reference block may be referred to as a candidate reference block corresponding to X1). A vector absolute value offset value between a 2^{nd} candidate reference block and the current subblock may be set to X2 (the 2^{nd} candidate reference block may be referred to as a candidate reference block corresponding to X2). By analogy, a vector absolute value offset value between an n^{th} candidate reference block and the current subblock may be set to Xn (the n^{th} candidate reference block may be referred to as a candidate reference block corresponding to Xn). It should be understood that n values of X1 to Xn may be set based on a requirement, and X1 to Xn are different. For example, X1=1, X2=2, ..., and Xn=n.

For example, a sum of absolute differences between the candidate reference block corresponding to X1 and the current subblock may be calculated, to obtain SDA_X1; a sum of absolute differences between the candidate reference block corresponding to X2 and the current subblock is calculated, to obtain SDA_X2; ...; and a sum of absolute differences between the candidate reference block corresponding to Xn and the current subblock is calculated, to obtain SDA_Xn. Then, second preset information may be selected from a range of X1 to Xn based on SDA_X1, SDA_X2, ..., and SDA_Xn. Specifically, SDA_X1, SDA_X2, ..., and SDA_Xn may be compared, and a candidate reference block with a smallest sum of absolute differences is selected from a plurality of candidate reference blocks as a reference block. If a sum of absolute differences SDA_Xm of an m^{th} (me[1, n], and m is an integer) candidate reference block is the smallest, Xm is selected from the range of X1 to Xn as second preset information. That is, second preset information=Xm. Correspondingly, SDA_IBC=SDA_Xm between the current subblock and the reference block.

S4022: Perform vertical prediction on the current subblock, to obtain a first predicted value; and calculate a sum of absolute differences between the current subblock and the first predicted value, to obtain SDA _intra.

For example, in a vertical prediction process, a pixel (a pixel may also be referred to as a sample) that is in a previous row of the current subblock and whose horizontal coordinates are the same as those of the current subblock may be determined as a reference block of the current subblock; the first predicted value of the current subblock is determined based on a reconstructed value of the reference block of the current subblock; and the sum of absolute differences between the current subblock and the first predicted value is calculated, to obtain SDA_intra.

As shown in FIG. 4c, for example, a size of each subblock is 2*2, a gray subblock is an encoded subblock, a white subblock is a non-encoded subblock, and a subblock in a dashed box is the current subblock. The vertical prediction process may be as follows: A 1*2 area above the current subblock may be used as a reference block; a reconstructed value of a pixel corresponding to "1" is used as a first predicted value of a pixel corresponding to "A"; a reconstructed value of a pixel corresponding to "2" is used as a first predicted value of a pixel corresponding to "B"; the first predicted value of the pixel corresponding to "A" is used as a first predicted value of a pixel corresponding to "C"; and the first predicted value of the pixel corresponding to "B" is used as a first predicted value of a pixel corresponding to "D".

For example, a preset value Y1 may be used as first preset information. The preset value Y1 is different from X1 to Xn. The preset value Y1 may be set based on a requirement, for example, 0. This is not limited in this application.

S4023: For the current subblock, determine, based on SDA_IBC and SDA_intra, whether to use the another intra prediction mode to replace the IBC mode.

Then, for the current subblock, SDA_IBC and SDA_intra may be compared, to determine whether to use the another intra prediction mode to replace the IBC mode.

In a possible manner, a sum of SDA_IBC and a preset bias may be determined. The preset bias is a bias for the vertical prediction mode. Whether SDA_intra is less than the sum is determined. When SDA_intra is less than the sum, for the current subblock, it is determined that the another intra prediction mode is to be used to replace the IBC mode; or when SDA_intra is greater than or equal to the sum, for the current subblock, it is determined that the another intra prediction mode is not to be used to replace the IBC mode.

For example, a prediction bias may be represented by M1, and M1 is an integer. Specifically, the prediction bias may be set based on a requirement. This is not limited in this application. In this way, a bias for the vertical prediction mode can be flexibly set based on an encoding scenario, and a better intra prediction mode can be selected for each subblock in the CU. Further, prediction accuracy is improved. A larger value of M1 indicates a higher bias for the vertical prediction mode, and vice versa. In an example, M1=0. In another example, M1=2.

In a possible manner, a sum of SDA_IBC and a preset bias may be determined. The preset bias is a bias for the vertical prediction mode. Whether SDA_intra is less than the sum is determined. When SDA_intra is less than the sum, whether SDA_intra is less than SDA_TH is determined; and when SDA_intra is less than SDA_TH, for the current subblock, it may be determined that the vertical prediction mode is to be used to replace the IBC mode; or when SDA_intra is greater than or equal to the sum or SDA_intra is greater than SDA_TH, for the current subblock, it may be determined that the vertical prediction mode is not to be used to replace the IBC mode.

SDA_TH is a maximum upper limit value of a sum of absolute differences corresponding to the another intra prediction mode. SDA_TH may be set based on a requirement. For example, SDA_TH may be set based on parameters such as a bit depth, an encoding format, and a pixel quantity of a subblock. In this way, prediction effect of vertical prediction can be improved.

For example, for the current subblock, S403 may be performed when it is determined that the vertical prediction mode is not to be used to replace the IBC mode; or S405 may be performed when it is determined that the vertical prediction mode is to be used to replace the IBC mode.

S403: Set a BV of the current subblock to the first preset information, where the BV set to the first preset information indicates that a prediction mode of the current subblock is the vertical prediction mode.

S404: Set a predicted value of the current subblock to the first predicted value, where the first predicted value is determined through vertical prediction.

S405: Set a block vector BV of the current subblock to the second preset information, where the BV set to the second preset information indicates that a prediction mode of the current subblock is the IBC mode, the second preset information is a vector absolute value offset value between the current subblock and the reference block, and the reference block is determined through IBC prediction.

S406: Set a predicted value of the current subblock to a second predicted value, where the second predicted value is determined through IBC prediction.

For example, in the process of S402, IBC prediction is performed on the current subblock, and the reference block of the current subblock is determined. The reconstructed value of the reference block may be used as the second predicted value.

For example, for S405 and S406, refer to the foregoing descriptions of S205 and S206. Details are not described herein again.

S407: Encode the current subblock based on the predicted value of the current subblock, to obtain a bitstream of the current subblock.

S408. Write the BV of the current subblock into the bitstream.

For example, for S407 and S408, refer to the foregoing descriptions of S207 and S208. Details are not described herein again.

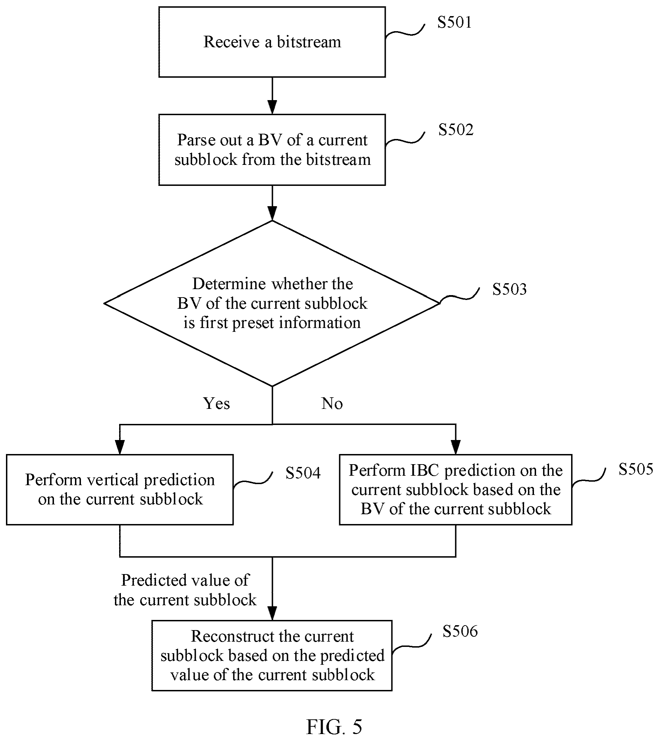

FIG. 5 is a diagram of an example decoding process. An decoding process in FIG. 5 corresponds to an encoding process in FIG. 4a.

S501: Receive a bitstream.

S502: Parse out a BV of a current subblock from the bitstream, where an intra prediction mode of a coding unit CU to which the current subblock belongs is an intra block copy IBC mode.

For example, for S501 and S502, refer to the foregoing descriptions of S201 and S202. Details are not described herein again.

S503: Determine whether the BV of the current subblock is first preset information.

For example, S504 may be performed if the BV of the current subblock is the first preset information; or S505 may be performed if the BV of the current subblock is not the first preset information.

S504: Perform vertical prediction on the current subblock, to obtain a predicted value of the current subblock.

For an example, for a process of performing vertical prediction on the current subblock in S504, refer to the foregoing descriptions. Details are not described herein again.

S505: Perform IBC prediction on the current subblock based on the BV of the current subblock, to obtain a predicted value of the current subblock.

S506: Reconstruct the current subblock based on the predicted value of the current subblock, to obtain a reconstructed block of the current subblock.

For example, for S505 and S506, refer to the foregoing descriptions of S305 and S306. Details are not described herein again.

For example, one another intra prediction mode may be selected from R other intra prediction modes. For the current subblock, whether to use the selected another intra prediction mode to replace the IBC mode may be determined. R is a positive integer.

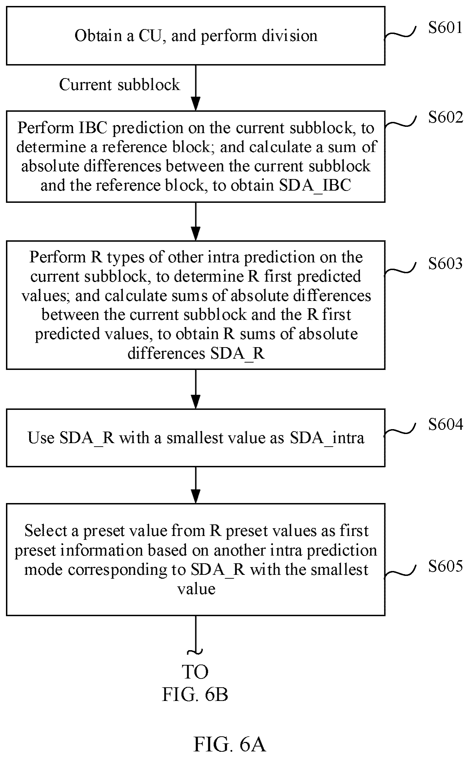

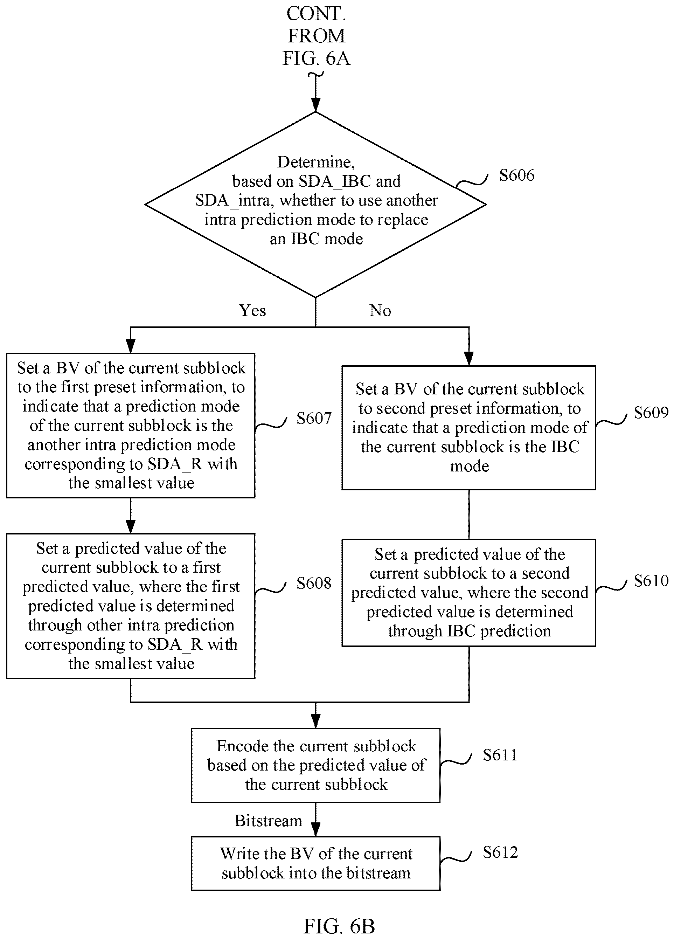

FIG. 6A and FIG. 6B are a diagram of an example encoding process.

S601: Obtain a coding unit CU, and divide the CU into a plurality of subblocks, where a prediction mode of the CU is an IBC mode.

For example, for S601, refer to the foregoing descriptions of S201. Details are not described herein again.

For example, one another intra prediction mode may be selected from R other intra prediction modes. For a current subblock, whether to use the selected another intra prediction mode to replace the IBC mode may be determined. A specific determining process may be S602 to S606:

S602: Perform IBC prediction on the current subblock, to determine a reference block; and calculate a sum of absolute differences between the current subblock and the reference block, to obtain SDA_IBC.

For example, for S602, refer to the foregoing descriptions of S4021. Details are not described herein again.

S603: Perform R types of other intra prediction on the current subblock, to determine R first predicted values; and calculate sums of absolute differences between the current subblock and the R first predicted values, to obtain R sums of absolute differences SDA_R.

For example, R types of other intra prediction may be separately performed on the current subblock, to determine the R first predictions. One first predicted value is determined by performing one type of other intra prediction on the current subblock. Then, the sums of absolute differences between the R first predicted values and the current subblock may be separately calculated, to obtain the R sums of absolute differences SDA_R. One of the R sums of absolute differences SDA_R corresponds to one another intra prediction mode.

S604: Use SDA_R with a smallest value as SDA_intra.

Then, SDA_R with the smallest value may be selected from the R sums of absolute differences SDA_R.

S605: Select a preset value from R preset values as first preset information based on another intra prediction mode corresponding to SDA_R with the smallest value.

For example, R corresponding preset values may be preset for the R other intra prediction modes. The R preset values are in one-to-one correspondence with the R other intra prediction modes, and different other intra prediction modes correspond to different preset values.

If SDA_R with the smallest value is an i^{th} sum of absolute differences SDA_R in the R sums of absolute differences SDA_R, the i^{th} sum of absolute differences SDA_R may be used as SDA_intra. The i^{th} sum of absolute differences SDA_R is a sum of absolute differences between the current subblock and an i^{th} first predicted value determined based on an i^{th} type of other intra prediction, the i^{th} preset value corresponds to an i^{th} another intra prediction mode, and i is an integer between 1 and R (including 1 and R). Further, a preset value corresponding to the i^{th} another intra prediction mode may be further used as the first preset information.

For example, R=3, and three other intra prediction modes include a vertical prediction mode, an angle prediction mode, and a DC prediction mode. The vertical prediction mode corresponds to a preset value Y1, the angle prediction mode corresponds to a preset value Y2, and the DC prediction mode corresponds to a preset value Y3.

A sum of absolute differences between the current subblock and a first predicted value determined through vertical prediction is calculated, to obtain SDA1_intra. A sum of absolute differences between the current subblock and a first predicted value determined through angle prediction is calculated, to obtain SDA2_intra. A sum of absolute differences between the current subblock and a third predicted value determined through DC prediction is calculated, to obtain SDA3_intra.

Then, the first preset information and SDA_intra may be determined based on SDA1_intra, SDA2_intra, and SDA3_intra. When SDA1_intra is the smallest, the preset value Y1 is used as the first preset information; or SDA1_intra is used as SDA_intra. When SDA2_intra is the smallest, the preset value Y2 is used as the first preset information; or SDA2_intra is used as SDA_intra. When SDA3_intra is the smallest in SDA1_intra, SDA2_intra, and SDA3_intra, the preset value Y3 is used as the first preset information, and SDA3_intra is used as SDA_intra.

S606: For the current subblock, determine, based on SDA_IBC and SDA_intra, whether to use the another intra prediction mode to replace the IBC mode.

For example, for S606, refer to the foregoing descriptions of S4023. Details are not described herein again.

For example, for the current subblock, S607 may be performed when it is determined that the another intra prediction mode is not to be used to replace the IBC mode; or for the current subblock, S609 may be performed when it is determined that the another intra prediction mode is to be used to replace the IBC mode.

S607: Set a BV of the current subblock to the first preset information, where the BV set to the first preset information indicates that a prediction mode of the current subblock is another intra prediction mode corresponding to SDA_R with the smallest value.

S608: Set a predicted value of the current subblock to the first predicted value, where the first predicted value is determined through other intra prediction corresponding to SDA_R with the smallest value.

S609: Set a block vector BV of the current subblock to second preset information, where the BV set to the second preset information indicates that a prediction mode of the current subblock is the IBC mode, the second preset information is a vector absolute value offset value between the current subblock and the reference block, and the second predicted value is determined through IBC prediction.

S610: Set a predicted value of the current subblock to the second predicted value, where the second predicted value is determined through IBC prediction.

S611: Encode the current subblock based on the predicted value of the current subblock, to obtain a bitstream of the current subblock.

S612. Write the BV of the current subblock into the bitstream.

For example, for S607 and S612, refer to the foregoing descriptions of S403 and S408. Details are not described herein again.

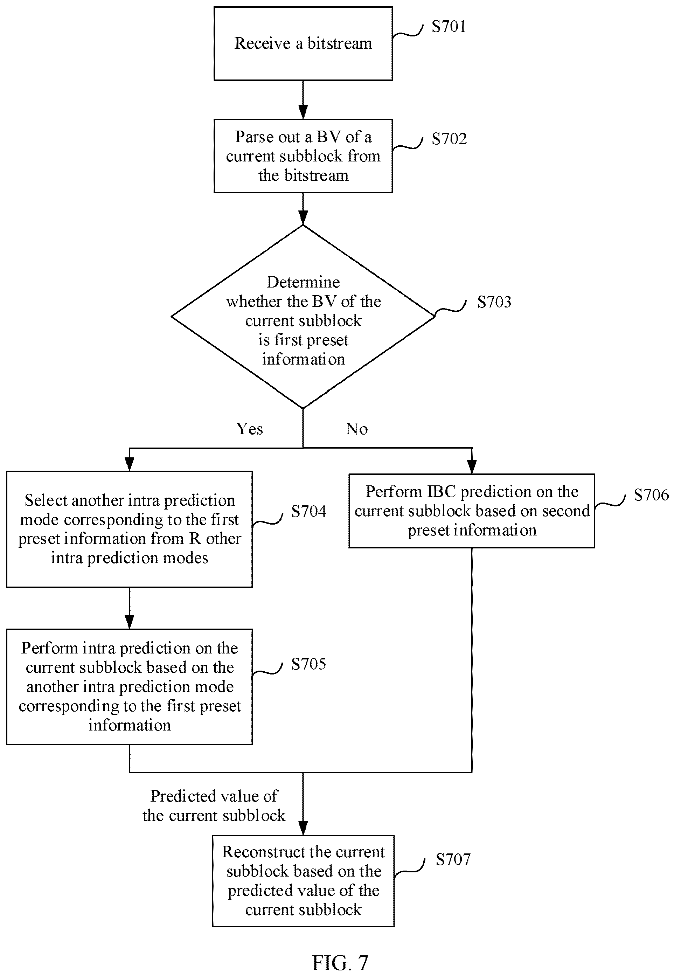

FIG. 7 is a diagram of an example decoding process.

S701: Receive a bitstream.

S702: Parse out a BV of a current subblock from the bitstream, where an intra prediction mode of a coding unit CU to which the current subblock belongs is an intra block copy IBC mode.

For example, for S701 and S702, refer to the foregoing descriptions of S301 and S302. Details are not described herein again.

S703: Determine whether the BV of the current subblock is first preset information.

For example, S704 may be performed if the BV of the current subblock is the first preset information; or S706 may be performed if the BV of the current subblock is not the first preset information.

S704: Select another intra prediction mode corresponding to the first preset information from R other intra prediction modes.

S705: Perform intra prediction on the current subblock based on the another intra prediction mode corresponding to the first preset information, to obtain a predicted value of the current subblock.

For example, when the BV of the current subblock is the first preset information and the first preset information is a preset value Y1, vertical prediction may be performed on the current subblock, to obtain the predicted value of the current subblock.

For example, when the BV of the current subblock is the first preset information and the first preset information is a preset value Y2, angle prediction may be performed on the current subblock, to obtain the predicted value of the current subblock.

For example, when the BV of the current subblock is the first preset information and the first preset information is a preset value Y3, DC prediction may be performed on the current subblock, to obtain the predicted value of the current subblock.

S706. Perform IBC prediction on the current subblock based on second preset information, to obtain a predicted value of the current subblock.

S707: Reconstruct the current subblock based on the predicted value of the current subblock, to obtain a reconstructed block of the current subblock.

For example, for S706 and S707, refer to the foregoing descriptions of S305 and S306. Details are not described herein again.

For example, to improve subjective quality of a subblock that is in the CU and for which another intra prediction mode is used to replace the IBC mode, a quantization parameter QP_intra are calculated based on flatness of these subblocks in a process of encoding and decoding the subblock that is in the CU and for which the another intra prediction mode is used to replace the IBC mode; and then quantization or dequantization is performed based on the quantization parameter QP_intra. For a subblock that is in the CU and whose prediction mode is the IBC mode, quantization or dequantization is performed based on a quantization parameter QP_IBC.

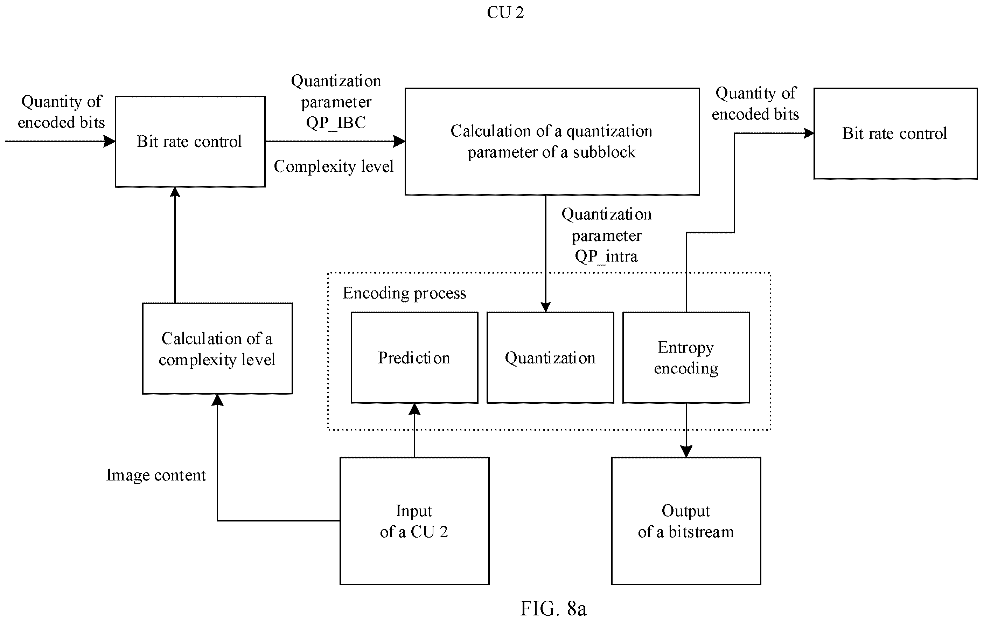

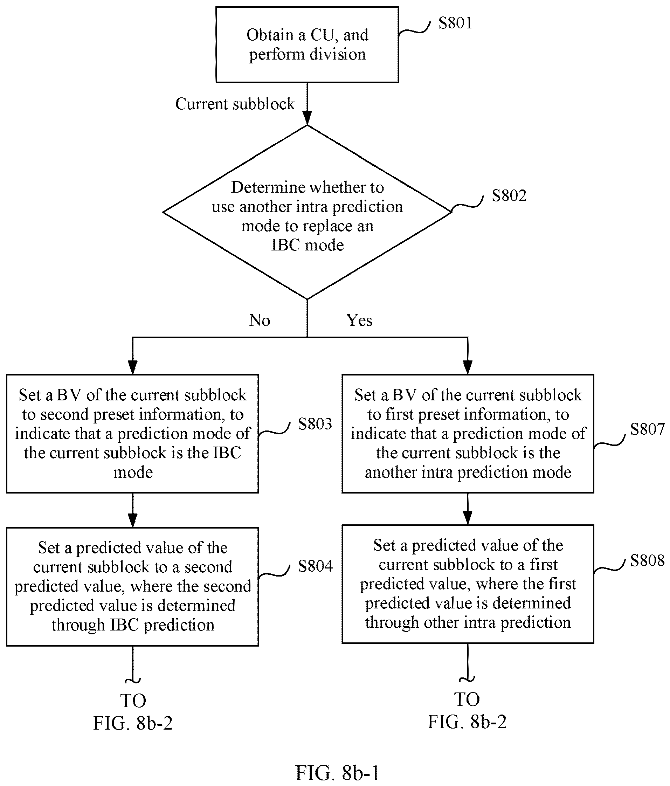

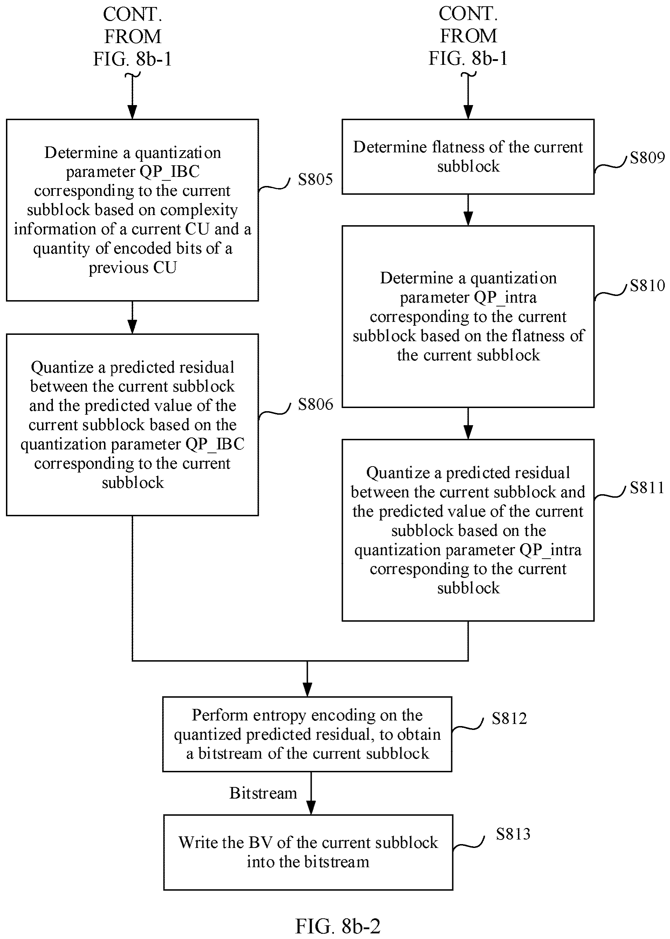

FIG. 8a is a diagram of an example encoding procedure. FIG. 8a shows a process of encoding a CU (namely, a CU 2) of a to-be-encoded image. In the embodiment in FIG. 8a, complexity information is a complexity level.

As shown in FIG. 8a, for example, an encoder sequentially performs prediction, quantization, and entropy encoding operations on the CU 2, and then may obtain a bitstream of the CU 2. In a process of encoding a subblock that is in the CU 2 and for which another intra prediction mode is used to replace an IBC mode, a quantization parameter QP_intra corresponding to each subblock is calculated based on flatness of each subblock; and then a predicted residual of each subblock is quantized based on the quantization parameter QP_intra corresponding to each subblock. For a subblock that is in the CU 2 and whose prediction mode is the IBC mode, the predicted residual of each subblock is quantized based on a quantization parameter QP_IBC.

FIG. 8b-1 and FIG. 8b-2 are a diagram of an example encoding process.

S801: Obtain a current CU, and divide the current CU into a plurality of subblocks, where a prediction mode of the current CU is an IBC mode.

S802: For a current subblock, determine whether to use another intra prediction mode to replace the IBC mode.

For example, for the current subblock, S803 may be performed when it is determined that the another intra prediction mode is not to be used to replace the IBC mode; or for the current subblock, S807 may be performed when it is determined that the another intra prediction mode is to be used to replace the IBC mode.

S803: Set a block vector BV of the current subblock to second preset information, where the BV set to the second preset information indicates that a prediction mode of the current subblock is the IBC mode, the second preset information is a vector absolute value offset value between the current subblock and a reference block, and a second predicted value is determined through IBC prediction.

S804: Set a predicted value of the current subblock to the second predicted value, where the second predicted value is determined through IBC prediction.

S805: Determine a quantization parameter QP_IBC corresponding to the current subblock based on complexity information of the current CU and a quantity of encoded bits of a previous CU.

In a possible manner, the complexity information of the current CU to which the current subblock belongs may be a complexity level. For example, the complexity level of the current CU may be determined based on a texture complexity level of the current CU and an IBC complexity level of the current CU. For example, a smaller value in the texture complexity level of the current CU and the IBC complexity level of the current CU may be determined as the complexity level of the current CU.

For example, a process of calculating the texture complexity level of the current CU may be as follows:

First, for each subblock in the current CU, a difference between adjacent pixel values may be progressively calculated in directions such as horizontal, vertical, and oblique directions, to obtain a plurality of differences. Then, after a sum of absolute values of the plurality of differences is obtained, a complexity value corresponding to the subblock is obtained.

Then, the complexity value is compared with a plurality of complexity thresholds, to obtain a complexity level of the subblock. For example, the plurality of complexity thresholds are A1, A2, A3, and A4. There are five complexity levels: K1, K2, K3, K4, and K5. When the complexity value of the subblock is less than A1, it may be determined that the complexity level of the subblock is K1; or when the complexity value of the subblock is greater than A1 and less than A2, it may be determined that the complexity level of the subblock is K2; or when the complexity value of the subblock is greater than A2 and less than A3, it may be determined that the complexity level of the subblock is K3; or when the complexity value of the subblock is greater than A3 and less than A4, it may be determined that the complexity level of the subblock is K4; or when the complexity value of the subblock is greater than A4, it may be determined that the complexity level of the subblock is K5.

Then, after a rule operation is performed on complexity levels of all subblocks, the texture complexity level of the current CU coding unit is obtained. For example, the current CU includes 10 subblocks. If complexity levels of eight subblocks are K4, the complexity level of the current CU may be K4. For another example, the current CU includes 10 subblocks. If complexity levels of five subblocks are K4, and complexity levels of five subblocks are K2, the complexity level of the current CU may be K3. That is, the foregoing rule for determining the texture complexity level of the current CU may be set based on a requirement. This is not limited in this application.

For example, a process of calculating the IBC complexity level of the current CU may be as follows: For each subblock of the current CU, IBC similarity prediction is performed on each subblock, to determine an IBC similarity prediction value (which may also be referred to as a similarity sample matrix) of each subblock. Then, a difference between the IBC similarity prediction value of each pixel in each subblock and an original value is calculated, to obtain a plurality of differences. After a sum of absolute values of the plurality of differences is obtained, a sum of absolute differences of the subblock is obtained; and the sum of absolute differences of the subblock is compared with a plurality of complexity thresholds, to obtain a complexity level of the subblock. For details, refer to the foregoing descriptions. Details are not described herein again. Then, after a rule operation is performed on complexity levels of all subblocks, the IBC complexity level of the current CU coding unit is obtained. For details, refer to the foregoing descriptions. Details are not described herein again.

IBC similarity prediction is as follows: When a search area is a pixel outside the current subblock (which may also be referred to as a reconstructed sample), if the pixel is an upper-side pixel (including an upper left corner pixel in the current subblock), IBC prediction is performed based on a reconstructed value of the upper-side pixel; or if the pixel is a left pixel (not including an upper left corner pixel in the current code block), IBC prediction is performed based on an original value of the left pixel.

S806: Quantize a predicted residual between the current subblock and the predicted value of the current subblock based on the quantization parameter QP_IBC corresponding to the current subblock.

S807: Set a BV of the current subblock to first preset information, where the BV set to the first preset information indicates that a prediction mode of the current subblock is the another intra prediction mode.

S808: Set a predicted value of the current subblock to a first predicted value, where the first predicted value is determined through other intra prediction.

S809: Determine flatness of the current subblock.

A process of determining the flatness of the current subblock is described subsequently.

S810: Determine a quantization parameter QP_intra corresponding to the current subblock based on the flatness of the current subblock.

For example, S810 may include S8101 and S8102:

S8101: Determine a quantization parameter QP_IBC based on complexity information of the current CU and a quantity of encoded bits of a previous CU.

S8102: Determine the quantization parameter QP_intra corresponding to the current subblock based on the flatness of the current subblock, the complexity information, and the quantization parameter QP_IBC.

For example, when the flatness of the current subblock and the complexity information meet a first preset condition, the quantization parameter QP_intra corresponding to the current subblock is determined based on the quantization parameter QP_IBC and a first preset step; when the flatness of the current subblock and the complexity information meet a second preset condition, the quantization parameter QP_intra corresponding to the current subblock is determined based on the quantization parameter QP_IBC and a second preset step; and when the flatness of the current subblock and the complexity information meet a third preset condition, the quantization parameter QP_IBC is used as the quantization parameter QP_intra corresponding to the current subblock.

For S8101 and S8102, refer to the following descriptions in the embodiment in FIG. 9b-1 and FIG. 9b-2.

S811: Quantize a predicted residual between the current subblock and the predicted value of the current subblock based on the quantization parameter QP_intra corresponding to the current subblock.

S812: Perform entropy encoding on the quantized predicted residual, to obtain a bitstream of the current subblock.

S813. Write the BV of the current subblock into the bitstream.

FIG. 9a is a diagram of an example decoding procedure. FIG. 9a shows a process of decoding a CU (namely, a CU 2). In FIG. 9a, complexity information is a complexity level.

As shown in FIG. 9a, for example, a decoder sequentially performs entropy decoding, dequantization, and prediction operations on a bitstream of the CU 2, and then may obtain a reconstructed image of the CU 2. In a process of decoding a subblock that is in the CU 2 and for which another intra prediction mode is used to replace an IBC mode, a quantization parameter QP_intra corresponding to each subblock is calculated based on flatness of each subblock; and then a quantized predicted residual that is of each subblock and that is obtained through parsing (entropy decoding) is dequantized based on the quantization parameter QP_intra corresponding to each subblock. For a subblock that is in the CU 2 and whose prediction mode is the IBC mode, the quantized predicted residual that is of each subblock and that is obtained through parsing (entropy decoding) is dequantized based on the quantization parameter QP_IBC.

FIG. 9b-1 and FIG. 9b-2 are a diagram of an example decoding process.

S901: Receive a bitstream.

S902: Parse out a block vector BV of a current subblock from the bitstream, where a prediction mode of a current CU to which the current subblock belongs is an intra block copy IBC mode.

S903: Determine whether the BV of the current subblock is first preset information.

For example, S904 may be performed if it is determined that the BV of the current subblock is second preset information; or S907 may be performed if it is determined that the BV of the current subblock is the first preset information.

S904. Perform IBC prediction on the current subblock based on second preset information, to obtain a predicted value of the current subblock.

S905: Determine a quantization parameter QP_IBC corresponding to the current subblock based on complexity information of the current CU and a quantity of encoded bits of a previous CU.

S906: Dequantize, based on the quantization parameter QP_IBC corresponding to the current subblock, a quantized predicted residual obtained by parsing the bitstream, to obtain a predicted residual of the current subblock.

S907: Perform other intra prediction on the current subblock, to obtain a predicted value of the current subblock.

For example, for S904 to S907, refer to the foregoing descriptions. Details are not described herein again.

S908: Determine flatness of the current subblock.

For example, the flatness of the current subblock may be determined based on a reconstructed block adjacent to the current subblock. For example, a difference between reconstructed values of adjacent pixels in the reconstructed block adjacent to the current subblock may be calculated, to obtain a plurality of differences; and the flatness of the current subblock may be obtained after a sum of the plurality of differences is obtained.

Specifically, it is assumed that a horizontal index of an upper left corner pixel in the current subblock in a current code block is x, a vertical index is y, and I is used to represent a reconstruction matrix (the reconstruction matrix includes a reconstructed value of a reconstructed pixel) of an image corresponding to a current coding unit to which the current subblock belongs. If another intra prediction mode is a vertical prediction mode, a difference between adjacent pixels in a previous row of the current subblock may be calculated, to obtain a plurality of differences; and a sum of absolute values of the plurality of differences is obtained, to obtain the flatness of the current subblock. For example, it is assumed that the current subblock is a 2x2 subblock, flatness=Abs(I[x][y-1]-I[x+1][y-1]).

If another intra prediction mode is an angle prediction mode or a DC prediction mode, a difference between adjacent pixels in a part or all of reconstructed pixels in a previous row of the current subblock is calculated, to obtain a plurality of differences; and a sum of absolute values of the plurality of differences is obtained, to obtain the flatness of the current subblock. For example, if the current subblock is a 2x2 subblock and a prediction mode of the current subblock is the DC prediction mode, flatness=Abs(I[x][y-1]-I[x+1][y-1])+Abs(I[x+1][y-1]-I[x+2][y-1])+Abs(I[x+2][y-1]-I[x+3][ y-1]).

S909: Determine a quantization parameter QP_intra corresponding to the current subblock based on the flatness of the current subblock.

Then, the quantization parameter QP_intra corresponding to the current subblock may be determined based on the flatness of the current subblock.

In a possible manner, the quantization parameter QP_IBC may be determined based on the complexity information of the current CU and the quantity of encoded bits of the previous CU. For details, refer to the foregoing descriptions. Details are not described herein again. Then, the quantization parameter QP_intra corresponding to the current subblock is determined based on the flatness of the current subblock, the complexity information, and the quantization parameter QP_IBC.

For example, a plurality of preset conditions may be set based on a quantization parameter adjustment gradient threshold, a quantization parameter adjustment complexity threshold, and a bit depth of the image, and a corresponding quantization parameter determining manner is set for each preset condition.

The preset conditions may include a first preset condition, a second preset condition, and a third preset condition. Correspondingly, the quantization parameter determining manner may include a first quantization parameter determining manner, a second quantization parameter determining manner, and a third quantization parameter determining manner.

For example, the first preset condition is that flatness is less than or equal to (QpRefineTh0 << (bdIdx >> 1)), and a complexity level of a coding unit is greater than or equal to BwqComplexTh. A first quantization parameter determining manner is QP_intra=Max(QP_IBC-S0, 0). QpRefineTh0 is a 0^{th} gradient threshold of quantization parameter adjustment, BwqComplexTh is a subblock quantization parameter adjustment complexity threshold, S0 is an adjustment step (namely, the first preset step, for example, S0=2) corresponding to the 0^{th} gradient threshold, bdIdx=Clip3(0, S2, BitDepth-S3), and BitDepth is a bit depth of an image. S2 represents a maximum bit depth difference, for example, S2=8; and may be specifically set based on a requirement. This is not limited in this application. In addition, S3 may be preset based on a requirement. This is not limited in this application. Clip3 is a clamp function.

For example, the second preset condition is: {flatness is less than or equal to (QpRefineTh1 << (bdIdx >> 1))}, {flatness is greater than (QpRefineTh0 << (bdIdx >> 1)), and/or a complexity level of a coding unit is less than BwqComplexTh} . A second quantization parameter determining manner is QP_intra=Max(QP_IBC-S1, 0). QpRefineTh1 is a 1^{st} gradient threshold of quantization parameter adjustment, and S1 is an adjustment step (namely, the second preset step, for example, S1=1) corresponding to the 1^{st} gradient threshold. QpRefineTh0 is less than QpRefineTh1.

For example, the third preset condition is that flatness is greater than (QpRefineTh1 << (bdIdx >> 1)). A third quantization parameter determining manner is QP_intra=QP_IBC.

Therefore, when the flatness of the current subblock and the complexity information meet the first preset condition, the quantization parameter QP_intra corresponding to the current subblock is determined based on the quantization parameter QP_IBC and the first preset step. For example, refer to the first quantization parameter determining manner.

When the flatness of the current subblock and the complexity information meet the second preset condition, the quantization parameter QP_intra corresponding to the current subblock is determined based on the quantization parameter QP_IBC and the second preset step. For example, refer to the second quantization parameter determining manner.

When the flatness of the current subblock and the complexity information meet the third preset condition, the quantization parameter QP_IBC is used as the quantization parameter QP_intra corresponding to the current subblock. For example, refer to the third quantization parameter determining manner.

S910: Dequantize, based on the quantization parameter QP_intra corresponding to the current subblock, a quantized predicted residual obtained by parsing the bitstream, to obtain a predicted residual of the current subblock.

S911: Add the predicted value of the current subblock and the predicted residual of the current subblock, to obtain the reconstructed block of the current subblock.

In an example, FIG. 10 is a block diagram of an apparatus 1000 according to an embodiment of this application. The apparatus 1000 may include a processor 1001 and a transceiver/transceiver pin 1002, and optionally further includes a memory 1003.

Components of the apparatus 1000 are coupled together through a bus 1004. In addition to a data bus, the bus 1004 further includes a power bus, a control bus, and a status signal bus. However, for clear description, various buses are referred to as the bus 1004 in the figure.

Optionally, the memory 1003 may be configured to store instructions in the foregoing method embodiments. The processor 1001 may be configured to: execute the instructions in the memory 1003, control a receive pin to receive a signal, and control a transmit pin to send a signal.

The apparatus 1000 may be the electronic device or a chip of the electronic device in the foregoing method embodiments.

For example, the electronic device may be a terminal device or a server.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data through the one or more interface circuits. When the one or more processors execute computer instructions, the electronic device is enabled to perform the foregoing related method steps to implement the encoding and decoding method in the foregoing embodiments. The interface circuit is a transceiver/transceiver pin 1002.

An embodiment further provides a computer-readable storage medium. The computer-readable storage medium stores computer instructions, and when the computer instructions are run on an electronic device, the electronic device is enabled to perform the foregoing related method steps to implement the encoding and decoding method in the foregoing embodiments.

An embodiment further provides a computer program product. The computer program product includes computer instructions, and when the computer instructions are executed by a computer or a processor, the computer is enabled to perform the foregoing related steps to implement the encoding and decoding method in the foregoing embodiments.

In addition, an embodiment of this application further provides an apparatus. The apparatus may be specifically a chip, a component, or a module, and the apparatus may include a processor and a memory that are connected. The memory is configured to store computer-executable instructions. When the apparatus runs, the processor may execute the computer-executable instructions stored in the memory, so that the chip performs the encoding and decoding method in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. A decoding method, wherein the method comprises:
receiving a bitstream;
parsing out a block vector BV of a current subblock from the bitstream, wherein a prediction mode of a coding unit CU to which the current subblock belongs is an intra block copy IBC mode;
for the current subblock, determining, based on the BV of the current subblock, whether to use another intra prediction mode to replace the IBC mode;
if it is determined that the another intra prediction mode is to be used to replace the IBC mode, performing other intra prediction on the current subblock, to obtain a predicted value of the current subblock; or
if it is determined that the another intra prediction mode is not to be used to replace the IBC mode, performing IBC prediction on the current subblock based on the BV of the current subblock, to obtain a predicted value of the current subblock; and
reconstructing the current subblock based on the predicted value of the current subblock, to obtain a reconstructed block of the current subblock.

2. The method according to claim 1, wherein the another intra prediction mode is a vertical prediction mode, and performing other intra prediction on the current subblock, to obtain the predicted value of the current subblock comprises:
performing vertical prediction on the current subblock, to obtain a predicted value of the current subblock.

3. The method according to claim 1, wherein performing other intra prediction on the current subblock, to obtain the predicted value of the current subblock comprises:
selecting another intra prediction mode corresponding to the BV of the current subblock from R other intra prediction modes; and
performing intra prediction on the current subblock based on the another intra prediction mode corresponding to the BV of the current subblock, to obtain the predicted value of the current subblock.

4. The method according to any one of claims 1 to 3, wherein for the current subblock, when it is determined that another intra prediction mode is to be used to replace the IBC mode, the method further comprises:
determining flatness of the current subblock; and
determining a quantization parameter QP_intra corresponding to the current subblock based on the flatness of the current subblock; and
reconstructing the current subblock based on the predicted value of the current subblock, to obtain the reconstructed block of the current subblock comprises:
dequantizing, based on the quantization parameter QP_intra corresponding to the current subblock, a quantized predicted residual obtained by parsing the bitstream, to obtain a predicted residual of the current subblock; and
adding the predicted value of the current subblock and the predicted residual of the current subblock, to obtain the reconstructed block of the current subblock.

5. The method according to claim 4, wherein determining the quantization parameter QP_intra corresponding to the current subblock based on the flatness of the current subblock comprises:
parsing out complexity information of the CU from the bitstream, and determining a quantization parameter QP_IBC corresponding to the CU; and
determining the quantization parameter QP_intra corresponding to the current subblock based on the flatness of the current subblock, the complexity information, and the quantization parameter QP_IBC.

6. The method according to claim 5, wherein determining the quantization parameter QP_intra corresponding to the current subblock based on the flatness of the current subblock, the complexity information, and the quantization parameter QP_IBC comprises:
when the flatness of the current subblock and the complexity information meet a first preset condition, determining the quantization parameter QP_intra corresponding to the current subblock based on the quantization parameter QP_IBC and a first preset step;
when the flatness of the current subblock and the complexity information meet a second preset condition, determining the quantization parameter QP_intra corresponding to the current subblock based on the quantization parameter QP_IBC and a second preset step; and
when the flatness of the current subblock and the complexity information meet a third preset condition, using the quantization parameter QP_IBC as the quantization parameter QP_intra corresponding to the current subblock.

7. The method according to any one of claims 4 to 6, wherein determining the flatness of the current subblock comprises:
determining the flatness of the current subblock based on a reconstructed subblock adjacent to the current subblock.

8. An encoding method, wherein the method comprises:
obtaining a coding unit CU, and dividing the CU into a plurality of subblocks, wherein a prediction mode of the CU is an intra block copy IBC mode;
for the current subblock, determining whether to use another intra prediction mode to replace the IBC mode;
if it is determined that the another intra prediction mode is to be used to replace the IBC mode, setting a BV of the current subblock to first preset information, and setting a predicted value of the current subblock to a first predicted value, wherein the BV set to the first preset information indicates that a prediction mode of the current subblock is the another intra prediction mode, and the first predicted value is determined through the other intra prediction; or
if it is determined that the another intra prediction mode is not to be used to replace the IBC mode, setting a block vector BV of the current subblock to second preset information, and setting a predicted value of the current subblock to a second predicted value, wherein the BV set to the second preset information indicates that a prediction mode of the current subblock is the IBC mode, the second preset information is a vector absolute value offset value between the current subblock and a reference block, and the reference block and the second predicted value are determined through the IBC prediction;
encoding the current subblock based on the predicted value of the current subblock, to obtain a bitstream of the current subblock; and
writing the BV of the current subblock into the bitstream of the current subblock.

9. The method according to claim 8, wherein for the current subblock, determining whether to use the another intra prediction mode to replace the IBC mode comprises:
performing IBC prediction on the current subblock, to determine the reference block; and calculating a sum of absolute differences between the current subblock and the reference block, to obtain SDA_IBC;
performing other intra prediction on the current subblock, to obtain the first predicted value; and calculating a sum of absolute differences between the current subblock and the first predicted value, to obtain SDA_intra; and
for the current subblock, determining, based on SDA_IBC and SDA_intra, whether to use the another intra prediction mode to replace the IBC mode.

10. The method according to claim 9, wherein for the current subblock, determining, based on SDA_IBC and SDA_intra, whether to use the another intra prediction mode to replace the IBC mode comprises:
determining a sum of SDA_IBC and a preset bias, wherein the preset bias is a bias for the another intra prediction mode;
determining whether SDA_intra is less than the sum; and
when SDA_intra is less than the sum, for the current subblock, determining to use the another intra prediction mode to replace the IBC mode.

11. The method according to claim 10, wherein for the current subblock, determining, based on SDA_IBC and SDA_intra, whether to use the another intra prediction mode to replace the IBC mode further comprises:
when SDA_intra is less than the sum, determining whether SDA_intra is less than SDA_TH, wherein SDA_TH is a maximum upper limit value of a sum of absolute differences corresponding to the another intra prediction mode; and
when SDA_intra is less than SDA_TH, for the current subblock, determining to use the another intra prediction mode to replace the IBC mode.

12. The method according to any one of claims 9 to 11, wherein the another intra prediction mode is a vertical prediction mode, and the first predicted value is determined through vertical prediction.

13. The method according to any one of claims 9 to 11, wherein determining the sum of absolute differences between the current subblock and the first predicted value, to obtain SDA_intra comprises:
calculating sums of absolute differences between the current subblock and R first predicted values, to obtain R sums of absolute differences SDA_R, wherein one first predicted value is determined based on one another intra prediction mode, and R is a positive integer; and
using SDA_R with a smallest value as SDA_intra; and
the method further comprises:
selecting a preset value from R preset values as the first preset information based on another intra prediction mode corresponding to SDA_R with the smallest value, wherein
the R preset values are in one-to-one correspondence with R other intra prediction modes, the BV set to the first preset information indicates the prediction mode of the current subblock, which is the another intra prediction mode corresponding to SDA_R with the smallest value, and the first predicted value is determined based on the another intra prediction mode corresponding to SDA_R with the smallest value.

14. The method according to any one of claims 8 to 13, wherein when it is determined that the another intra prediction mode is to be used to replace the IBC mode, the method further comprises:
determining flatness of the current subblock; and
determining a quantization parameter QP_intra corresponding to the current subblock based on the flatness of the current subblock; and
encoding the current subblock based on the predicted value of the current subblock, to obtain the bitstream of the current subblock comprises:
quantizing a predicted residual between the current subblock and the predicted value of the current subblock based on the quantization parameter QP_intra corresponding to the current subblock; and
performing entropy encoding on the quantized predicted residual, to obtain the bitstream of the current subblock.

15. The method according to claim 14, wherein determining the quantization parameter QP_intra corresponding to the current subblock based on the flatness of the current subblock comprises:
determining complexity information of the CU and a quantization parameter QP_IBC corresponding to the CU; and
determining the quantization parameter QP_intra corresponding to the current subblock based on the flatness of the current subblock, the complexity information, and the quantization parameter QP_IBC.

16. The method according to claim 15, wherein determining the quantization parameter QP_intra corresponding to the current subblock based on the flatness of the current subblock, the complexity information, and the quantization parameter QP_IBC comprises:
when the flatness of the current subblock and the complexity information meet a first preset condition, determining the quantization parameter QP_intra corresponding to the current subblock based on the quantization parameter QP_IBC and a first preset step;
when the flatness of the current subblock and the complexity information meet a second preset condition, determining the quantization parameter QP_intra corresponding to the current subblock based on the quantization parameter QP_IBC and a second preset step; and
when the flatness of the current subblock and the complexity information meet a third preset condition, using the quantization parameter QP_IBC as the quantization parameter QP_intra corresponding to the current subblock.

17. The method according to any one of claims 14 to 16, wherein determining the flatness of the current subblock comprises:
determining the flatness of the current subblock based on a reconstructed subblock adjacent to the current subblock.

18. An electronic device, comprising:
a memory and a processor, wherein the memory is coupled to the processor; and
the memory stores program instructions, and when the program instructions are executed by the processor, the electronic device is enabled to perform the decoding method according to any one of claims 1 to 7.

19. An electronic device, comprising:
a memory and a processor, wherein the memory is coupled to the processor; and
the memory stores program instructions, and when the program instructions are executed by the processor, the electronic device is enabled to perform the encoding method according to any one of claims 8 to 17.

20. A chip, comprising one or more interface circuits and one or more processors, wherein the one or more processors receive or send data through the one or more interface circuits, and when the one or more processors execute computer instructions, the electronic device is enabled to perform the method according to any one of claims 1 to 7.

21. A chip, comprising one or more interface circuits and one or more processors, wherein the one or more processors receive or send data through the one or more interface circuits, and when the one or more processors execute computer instructions, the electronic device is enabled to perform the method according to any one of claims 8 to 17.

22. A computer-readable storage medium, wherein the computer-readable storage medium stores a computer program, and when the computer program is run on a computer or a processor, the computer or the processor is enabled to perform the method according to any one of claims 1 to 17.

23. A computer program product, wherein the computer program product comprises computer instructions, and when the computer instructions are executed by a computer or a processor, steps of the method according to any one of claims 1 to 17 are performed.

24. A bitstream storage apparatus, wherein the apparatus comprises a receiver and at least one storage medium;
the receiver is configured to receive a bitstream;
the at least one storage medium is configured to store the bitstream; and
the bitstream is generated according to the encoding method according to any one of claims 8 to 17.

25. A bitstream transmission apparatus, wherein the apparatus comprises a transmitter and at least one storage medium;
the at least one storage medium is configured to store a bitstream, and the bitstream is generated according to the encoding method according to any one of claims 8 to 17; and
the transmitter is configured to: obtain the bitstream from the storage medium, and send the bitstream to a device-side device through a transmission medium.

26. A bitstream distribution system, wherein the system comprises:
at least one storage medium, configured to store at least one bitstream, wherein the at least one bitstream is generated according to the encoding method according to any one of claims 8 to 17; and
a streaming media device, configured to: obtain a target bitstream from the at least one storage medium, and send the target bitstream to a device-side device, wherein the streaming media device comprises a content server or a content delivery server.
